# EUROPEAN PATENT APPLICATION

(11) **EP 4 823 215 A1**
(43) Date of publication of application: **14.10.2026**
(21) Application number: 24900909.3
(22) Date of filing: 14.11.2024
(51) Int. Cl.: H04W 72/25, H04W 72/0446, H04W 72/0453, H04W 74/0808, H04W 76/14, H04W 24/08, H04W 92/18

(54) **METHOD, COMMUNICATION DEVICE, PROCESSING DEVICE, AND STORAGE MEDIUM FOR TRANSMITTING SIDELINK SIGNAL, AND METHOD, COMMUNICATION DEVICE, PROCESSING DEVICE, AND STORAGE MEDIUM FOR RECEIVING SIDELINK SIGNAL**

(30) Priority: 04.12.2023 KR 20230173730
(71) Applicant: Hyundai Mobis Co., Ltd., Gangnam-gu Seoul 06141 (KR)
(72) Inventor: KIM, Tae Hyoung, Cheonan-si, Chungcheongnam-do 31168 (KR)
(74) Representative: Jung, Minkyu
(86) International application number: PCT/KR2024/017960
(87) International publication number: WO 2025/121722

(57) **Abstract**

A communication device of the present specification transmits a first SCI format including channel occupancy time (COT) sharing information, which includes time domain information and frequency domain information related to a COT of a cell. The first SCI format may include a first zone identifier and a second zone identifier. The first zone identifier is an identifier of a zone to which the communication device belongs, and the second zone identifier is an identifier of a zone to which a destination of a transport block belongs.

## Description

### TECHNICAL FIELD

The present specification relates to a wireless communication system.

### BACKGROUND

Wireless communication systems support communications between user equipment (UEs) using available system resources (e.g., bandwidth, transmission power, etc.). With the introduction of new wireless communication technologies, the number of UEs to which a BS needs to provide services within a predetermined resource area is increasing, and the amount of data and control information transmitted and received with the UEs served by the BS is also increasing. Since the amount of radio resources available to the BS for communication with the UE(s) is finite, new methods are required to enable the BS to efficiently receive and transmit uplink/downlink data and/or uplink/downlink control information from and to the UE(s) using these limited radio resources. That is, as node density and/or UE density increase, methods for efficiently using high-density nodes or high-density UEs for communication are required. For example, as a solution to address the burden on BSs due to rapidly increasing data traffic, sidelink (SL) communication, which supports direct communication between two or more nearby UEs without passing through a network node using wireless communication technology, has been studied. As the need for vehicle-to-everything (V2X) communication, which is a communication technology that supports wired/wireless communication between vehicles and other vehicles, infrastructure, networks, or pedestrians, arises, a rapid increase in SL communication is anticipated.

### DISCLOSURE

### TECHNICAL PROBLEM

Considering the rapidly growing volume and frequency of SL communication, solutions for stably supporting the SL communication are required.

Objects of the present specification are not limited to the above object, and other objects that are not described will be able to be clearly understood by those skilled in the art to which the present specification pertains based on the following description.

### TECHNICAL SOLUTION

According to an aspect of the present specification, there is provided a method of transmitting, by a communication device, a sidelink signal in a wireless communication system. The method includes performing a Type 1 channel access on a cell for transmission of a transport block, and based on success of the Type 1 channel access for the cell, transmitting first sidelink control information (SCI) format including time domain information and frequency domain information on a channel occupancy time (COT) for the cell, and the transport block within the COT determined by the Type 1 channel access, wherein the first SCI format includes a first zone identifier (ID) and a second zone ID, the first zone ID being an ID of a zone to which the communication device belongs and the second zone ID being a zone ID of a zone to which a destination of the transport block belongs.

According to another aspect of the present specification, there is provided a communication device for transmitting a sidelink signal in a wireless communication system. The communication device includes at least one transceiver, at least one processor, and at least one memory that is operatively connected to the at least one processor and stores instructions that, when executed, cause the at least one processor to perform operations, wherein the operations include performing a Type 1 channel access on a cell for transmission of a transport block, and based on success of the Type 1 channel access for the cell, transmitting first sidelink control information (SCI) format including time domain information and frequency domain information on a channel occupancy time (COT) for the cell, and the transport block within the COT determined by the Type 1 channel access, wherein the first SCI format includes a first zone identifier (ID) and a second zone ID, the first zone ID being an ID of a zone to which the communication device belongs and the second zone ID being a zone ID of a zone to which a destination of the transport block belongs.

According to still another aspect of the present specification, there is provided a processing device. The processing device includes at least one processor, and at least one memory that is operatively connected to the at least one processor and stores instructions that, when executed, cause the at least one processor to perform operations, wherein the operations include performing a Type 1 channel access on a cell for transmission of a transport block, and based on success of the Type 1 channel access for the cell, transmitting first sidelink control information (SCI) format including time domain information and frequency domain information on a channel occupancy time (COT) for the cell, and the transport block within the COT determined by the Type 1 channel access, wherein the first SCI format includes a first zone identifier (ID) and a second zone ID, the first zone ID being an ID of a zone to which the communication device belongs and the second zone ID being a zone ID of a zone to which a destination of the transport block belongs.

According to yet another aspect of the present specification, a computer-readable non-transitory storage medium including at least one computer program that causes at least one processor to perform operations. The operations include performing a Type 1 channel access on a cell for transmission of a transport block, and based on success of the Type 1 channel access for the cell, transmitting first sidelink control information (SCI) format including time domain information and frequency domain information on a channel occupancy time (COT) for the cell, and the transport block within the COT determined by the Type 1 channel access, wherein the first SCI format includes a first zone identifier (ID) and a second zone ID, the first zone ID being an ID of a zone to which the communication device belongs and the second zone ID being a zone ID of a zone to which a destination of the transport block belongs.

According to yet aspect of the present specification, there is provided a method of receiving, by a communication device, a sidelink signal in a wireless communication system. The method may include receiving a first SCI format including COT sharing information including time domain information and frequency domain information on a COT for a cell (Control, SCI), wherein the first SCI format includes a first zone ID and a second zone ID, the first zone ID is the ID of the zone to which a first communication device that transmitted the first SCI format belongs, and the second zone ID is the zone ID of the zone to which a second communication device that is the destination of the transport block associated with the first SCI format belongs; and performing a sidelink transmission within the COT, based on that the first zone ID or the second zone ID is the same as a third zone ID of the communication device.

According to yet another aspect of the present specification, there is provided a communication device for receiving a sidelink signal in a wireless communication system. The communication device includes at least one transceiver, at least one processor, and at least one memory that is operatively connected to the at least one processor and stores instructions that, when executed, cause the at least one processor to perform operations, wherein the operations may include receiving a first SCI format including COT sharing information including time domain information and frequency domain information on a COT for a cell (Control, SCI), wherein the first SCI format includes a first zone ID and a second zone ID, the first zone ID is the ID of the zone to which a first communication device that transmitted the first SCI format belongs, and the second zone ID is the zone ID of the zone to which a second communication device that is the destination of the transport block associated with the first SCI format belongs; and performing a sidelink transmission within the COT, based on that the first zone ID or the second zone ID is the same as a third zone ID of the communication device.

According to yet another aspect of the present specification, there is provided a processing device. The processing device includes at least one processor, and at least one memory that is operatively connected to the at least one processor and stores instructions that, when executed, cause the at least one processor to perform operations, wherein the operations include performing a Type 1 channel access on a cell for transmission of a transport block, and based on success of the Type 1 channel access for the cell, receiving first sidelink control information (SCI) format including time domain information and frequency domain information on a channel occupancy time (COT) for the cell, and the transport block within the COT determined by the Type 1 channel access, wherein the first SCI format includes a first zone identifier (ID) and a second zone ID, the first zone ID being an ID of a zone to which the communication device belongs and the second zone ID being a zone ID of a zone to which a destination of the transport block belongs.

According to yet another aspect of the present specification, a computer-readable non-transitory storage medium including at least one computer program that causes at least one processor to perform operations. The operations may include receiving a first sidelink control information (SCI) format including time domain information and frequency domain information on a channel occupancy time (COT) for a cell, wherein the first SCI format includes a first zone ID and a second zone ID, the first zone identifier being an ID of a zone to which the first communication device that has transmitted the first SCI format belongs, and the second zone ID being a zone ID of a zone to which the second communication device that is a destination of a transport block related to the first SCI belongs, and performing a sidelink transmission within the COT based on the first zone ID or the second zone ID is the same as a third zone ID of the communication device.

In each aspect of the present specification, the first SCI format may be transmitted or received via a physical sidelink shared channel (PSSCH).

In each aspect of the present specification, the PSSCH and a physical sidelink control channel (PSCCH) carrying a second SCI format for scheduling the first SCI format may be transmitted or received within the COT.

In each aspect of the present specification, in the case of the method or operations including the receiving of the first SCI format, the performing of the sidelink transmission within the COT based on that the first zone ID or the second zone ID is the same as the third zone ID of the communication device may include performing a Type 2 channel access within the COT, and performing the sidelink transmission within the COT based on success of the Type 2 channel access.

In each aspect of the present specification, in the case of the method or operations including the receiving of the first SCI format, the performing of the sidelink transmission may include transmitting a second SCI format including a cast type field set to unicast.

In each aspect of the present specification, the performing of the sidelink transmission within the COT based on that the first zone ID or the second zone ID is the same as the third zone ID of the communication device may include performing the sidelink transmission to the first communication device based on that the third zone ID is the same as the second zone ID and a source ID in the first SCI format matches a destination ID assigned to the communication device.

In each aspect of the present specification, the performing of the sidelink transmission within the COT based on that the first zone ID or the second zone ID is the same as the third zone ID of the communication device includes performing the sidelink transmission to the target communication device based on that the third zone ID is the same as the second zone ID and an ID of a zone to which the target communication device for the sidelink transmission belongs is the same as the first zone ID.

In each aspect of the present specification, the performing of the sidelink transmission within the COT based on that the first zone ID or the second zone ID is the same as the third zone ID of the communication device may include performing the sidelink transmission to the second communication device based on that the third zone ID is the same as the first zone ID and a destination ID in the first SCI format matches a destination ID assigned to the communication device.

In each aspect of the present specification, the performing of the sidelink transmission within the COT based on that the first zone ID or the second zone ID is the same as the third zone ID of the communication device includes performing the sidelink transmission to the target communication device based on that the third zone ID is the same as the first zone ID and an ID of a zone to which the target communication device for the sidelink transmission belongs is the same as the second zone ID.

In each aspect of the present specification, the performing of the sidelink transmission within the COT based on that the first zone ID or the second zone ID is the same as the third zone ID of the communication device may include performing the sidelink transmission to the first communication device based on that the third zone ID is the same as the first zone ID and a source ID in the first SCI format matches a destination ID assigned to the communication device.

In each aspect of the present specification, the performing of the sidelink transmission within the COT based on that the first zone ID or the second zone ID is the same as the third zone ID of the communication device may include performing the sidelink transmission to the first communication device based on that the third zone ID is the same as the second zone ID and a source ID in the first SCI format matches a destination ID assigned to the communication device.

In each aspect of the present specification, the first SCI format may include a COT sharing availability indication field.

In each aspect of the present specification, the method or operation including the receiving of the first SCI format may include comparing the first zone ID or the second zone ID with a third zone identifier of the communication device based on that the COT sharing availability indication field is set to a first value.

The above configurations are merely some examples of the present specification, and various examples reflecting the technical features of the present specification can be derived and understood by those skilled in the art based on the following detailed description.

### ADVANTAGEOUS EFFECTS

According to some embodiment(s) of the present specification, wireless communication signals can be efficiently transmitted and received. Accordingly, the overall throughput of the wireless communication system can be increased.

According to some embodiments of the present specification, the SL communication technology in the licensed spectrum, which is licensed to a specific network operator and can be used exclusively or preferentially by the corresponding network operator, can also be used in the shared spectrum.

According to some embodiments of the present specification, sidelink communication can be efficiently performed in the shared spectrum, which is unlicensed spectrum that is not licensed to a specific network operator and can be freely used by multiple network operators.

Effects of the present specification are not limited to the above object, and other effects that are not described will be able to be clearly understood by those skilled in the art to which the present specification pertains based on the following description.

### BRIEF DESCRIPTION OF THE DRAWINGS

FIG. 1 is a block diagram showing examples of communication devices capable of performing a method according to the present specification.
FIG. 2 shows an example of a frame structure available in a 3GPP-based wireless communication system.
FIG. 3 shows a resource grid of a slot.
FIG. 4 shows communication links in a wireless communication system.
FIG. 5 is a view for describing frequency resources and time resources for a sidelink.
FIGS. 6 and 7 show transmission structures of physical channels within a slot.
FIG. 8 is a view for describing a channel access mechanism on a shared spectrum according to some embodiments.
FIG. 9 shows a flow of a channel access process.
FIG. 10 shows sharing of channel occupancy time (COT) between a BS and a UE.
FIGS. 11 and 12 show UE-to-UE COT sharing that may be used for sidelink communication.
FIG. 13 shows a relationship between identifiers of a transmitting UE and identifiers of a receiving UE.
FIG. 14 shows zone identifier (IDs).
FIG. 15 is a view for describing the concept of UE-to-UE COT sharing according to some embodiments of the present specification.
FIGS. 16 to 21 show location-based COT sharing according to some embodiments of the present specification.
FIG. 22 shows an example of a process in which a communication device performs a sidelink transmission according to some embodiments of the present specification.
FIG. 23 shows an example of a process in which the communication device performs sidelink reception according to some embodiments of the present specification.

### DETAILED DESCRIPTION

Hereinafter, various embodiments of the present specification will be described in detail with reference to the accompanying drawings. The detailed description set forth below together with the accompanying drawings is intended to illustrate exemplary embodiments of the present specification and is not intended to represent the only possible embodiments of the present specification. The following detailed description includes specific details to provide a thorough understanding of the present specification. However, those skilled in the art will understand that the present specification may be carried out without these specific details.

In some cases, well-known structures and devices may be omitted or illustrated in the form of a block diagram, focusing on core functions of each structure and device, to avoid obscuring the concepts of the present specification. In addition, the same reference numerals will be used throughout the present specification to describe the same components.

The techniques, devices, and systems, which will be described below, may be applied to various wireless multiple access systems.

For convenience of description, hereinafter, the present specification will be described based on a 3rd Generation Partnership Project (3GPP)-based communication system. However, the technical features of the present specification are not limited thereto. For example, although the following detailed description is based on 3GPP LTE or 5G technology, some embodiments of the present specification are also applicable to any other mobile communication system and systems to be introduced in the future (e.g., 6G) except for matters specific to 3GPP LTE/5G.

Among terms and technologies used in the present specification, terms and technologies that are not specifically described may reference 3GPP-based standard documents, for example, 3GPP TS 23.304, 3GPP TS 23.285, 3GPP TS 23.287, 3GPP TS 24.587, 3GPP TS 36.211, 3GPP TS 36.212, 3GPP TS 36.213, 3GPP TS 36.300, 3GPP TS 36.321, 3GPP 36.322, 3GPP TS 36.323, 3GPP TS and 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.322, 3GPP TS 38.323, 3GPP TS 38.331, etc.

In the examples of the present specification, which will be described below, the expression that a device "assumes" may mean that an entity transmitting a channel transmits the channel according to the "assumption." This may mean that an entity receiving the channel receives or decodes the channel according to the "assumption" under the premise that the channel was transmitted according to the "assumption."

In the present specification, UE (UE) may be fixed or may have mobility and includes various devices that communicate with a base station (BS) to transmit and/or receive user data and/or various control information. The UE may be referred to as terminal equipment, a mobile station (MS), a mobile terminal (MT), or a user terminal (UT). In addition, in the present specification, the BS generally refers to a fixed station that communicates with a UE and/or other BSs and exchanges various data and control information with the UE and other BSs. The BS may be referred to by other terms, such as an advanced BS (ABS), a node-B (NB), an evolved node-B (eNB), a gNB, a base transceiver system (BTS), an access point (AP), a processing server (PS), etc. Hereinafter, for convenience of description, a base station is referred to as a BS regardless of the type or version of the communication technology.

In the present specification, a node refers to a fixed point capable of transmitting and receiving radio signals in communication with a UE. Various types of BSs, regardless of their names, may be used as nodes. At least one antenna is installed on one node. The antenna may refer to a physical antenna, an antenna port, a virtual antenna, or an antenna group. A node is also referred to as a point.

Meanwhile, 3GPP-based communication systems use the concept of cells to manage radio resources, and the cell associated with radio resources is distinguished from a cell within a geographic area. The "cell" within the geographic area can be understood as a coverage area in which a node may provide services using a carrier, and the "cell" of the radio resource is associated with a bandwidth (BW), which is a frequency range configured by the carrier. Since downlink coverage, which is a range in which a node may transmit valid signals, and uplink coverage, which is a range in which a node may receive valid signals from a UE, depend on the carrier carrying the corresponding signals, the coverage of the node is associated with the coverage of the "cell" of the radio resources used by the node. Accordingly, the term "cell" may be used to sometimes refer to the coverage of the service by the node, sometimes to the radio resource, and sometimes to the range in which the signal using the radio resource may reach with valid strength.

The "cell" associated with the radio resource may be defined as a combination of downlink (DL) resources and uplink (UL) resources, that is, a DL component carrier (CC) and an UL CC. The cell may be configured with the DL resource only or with a combination of the DL and UL resources. When carrier aggregation is supported, linkage between a carrier frequency of the DL resources (or DL CCs) and a carrier frequency of the UL resources (or UL CCs) may be indicated by system information. Here, the carrier frequency may be the same as or different from a center frequency of each cell or CC.

In a wireless communication system, a UE receives information from the BS via the DL, and the UE transmits information to the BS via the UL. The information transmitted and/or received by the BS and the UE includes data and various control information, and various physical channels are present depending on the type and purpose of the information transmitted and/or received by the channels.

3GPP-based communication standards define downlink physical channels corresponding to resource elements carrying information originating from higher-level layers, and downlink physical signals corresponding to resource elements used by the physical layer but not carrying information originating from higher-level layers. For example, a physical downlink shared channel (PDSCH), a physical broadcast channel (PBCH), a physical downlink control channel (PDCCH), and the like are defined as downlink physical channels, and reference signals and synchronization signals are defined as downlink physical signals. A reference signal (RS), also referred to as a pilot, refers to a signal with a predefined, a predefined specific waveform known to both the BS and the UE. For example, a demodulation reference signal (DMRS), a channel state information RS (CSI-RS), and the like are defined as downlink reference signals. 3GPP-based communication standards define upperlink physical channels corresponding to resource elements carrying information originating from higher-level layers, and upperlink physical signals corresponding to resource elements used by the physical layer but not carrying information originating from higher-level layers. For example, a physical uplink shared channel (PUSCH), a physical uplink control channel (PUCCH), and a physical random access channel (PRACH) are defined as uplink physical channels and define the demodulation reference signal (DMRS) for uplink control/data signals, a sounding reference signal (SRS) used for uplink channel measurement, etc.

In the present specification, the PDCCH refers to a set of time-frequency resources (e.g., resource elements (REs)) carrying downlink control information (DCI), and the PDSCH refers to a set of time-frequency resources carrying downlink data. In addition, the PUCCH, the PUSCH, and the PRACH refer to sets of time-frequency resources carrying uplink control information (UCI), uplink data, and a random access preamble, respectively. Hereinafter, the expression that a UE/BS transmits/receives a PUCCH/PUSCH/PRACH is used with the same meaning as transmitting/receiving UCI/uplink data/random access preamble on or via the PUCCH/PUSCH/PRACH, respectively. In addition, the expression that a BS/UE transmits/receives a PBCH/PDCCH/PDSCH is used with the same meaning as transmitting/receiving broadcast information/DCI/downlink data on or via the PBCH/PDCCH/PDSCH, respectively.

In the present specification, radio resources (e.g., time-frequency resources) scheduled or configured by the BS to the UE for transmission or reception of the PUCCH/PUSCH/PDSCH are also referred to as PUCCH/PUSCH/PDSCH resources.

Since a communication device receives physical channels and/or physical signals in the form of radio signals, it is not possible to selectively receive, via a radio frequency (RF) receiver, only those radio signals that include a specific physical channel or a specific physical signal, or to selectively receive, via the RF receiver, only those radio signals that exclude a specific physical channel or a specific physical signal. In actual operation, the communication device first receives the radio signals on the cell via the RF receiver, converts the received radio signals, which are RF band signals, into baseband signals, and decodes the physical signals and/or physical channels within the baseband signals using one or more processors. Accordingly, in some embodiments of the present specification, when the physical signal and/or the physical channel are not received, it does not actually mean that the communication device does not receive radio signals including the physical signal and/or the physical channel at all, but rather does not attempt to recover the physical signal and/or the physical channel, for example, does not attempt to decode the physical signal and/or the physical channel from the radio signals.

Communication systems applied to the present specification include wireless devices, BSs, and networks. Here, the wireless device may refer to a device that performs communication using wireless access technology (e.g., 5G NR (New RAT), LTE (e.g., E-UTRA), Wi-Fi, and 6G to be introduced in the future).

Although not limited thereto, the wireless device may include a robot, vehicles, an eXtended Reality (XR) device, a hand-held device, an Internet of Things (IoT), and an artificial intelligence (AI) device/server. For example, the BS and the network may also be implemented as wireless devices, and a specific wireless device may operate as a BS/network node for other wireless devices.

The wireless device may be connected to the network through the BS. AI technology may be applied to the wireless device, and the wireless device may be connected to an AI server through a network. The wireless devices may communicate with each other through the BS/network, but they may also directly communicate with each other without using the BS/network (e.g., sidelink communication).

Wireless communication/connections may be established between wireless devices and BSs, between BSs, and/or between wireless devices. Here, wireless communication/connection may be established through various wireless access technologies (e.g., 5G NR) for uplink/downlink (UL/DL) communication and sidelink (SL) communication (or D2D communication). Through wireless communication/connection (UL/DL, SL), the wireless device and the BS/the wireless device may transmit/receive radio signals. To this end, at least some of various configuration information configuration processes, various signal processing processes (e.g., channel encoding/decoding, modulation/demodulation, resource mapping/demapping, and the like), a resource allocation process, and the like for transmitting/receiving radio signals may be performed based on various proposals of the present specification.

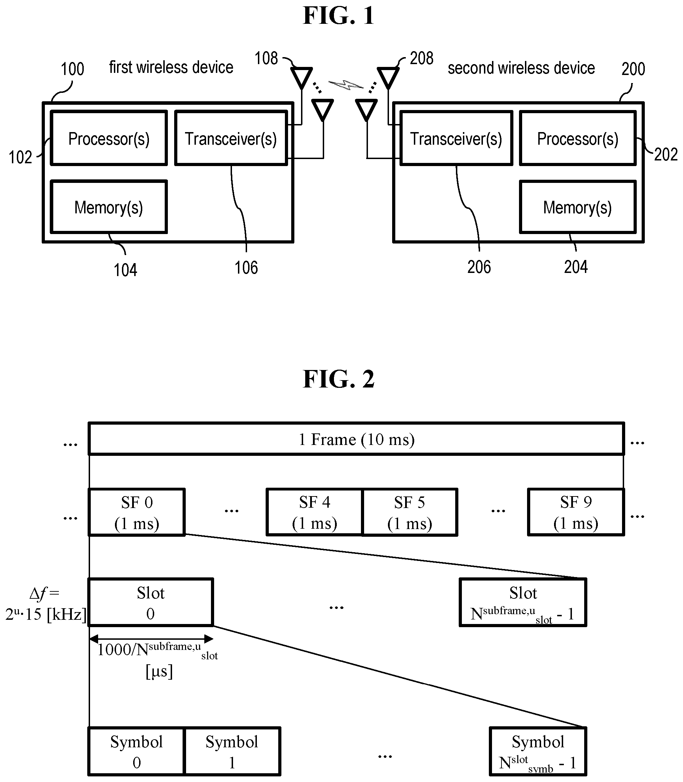

FIG. 1 is a block diagram showing examples of communication devices capable of performing a method according to the present specification. Referring to FIG. 1, a first wireless device 100 and a second wireless device 200 may transmit and/or receive radio signals using various wireless access technologies. Here, {the first wireless device 100 and the second wireless device 200} may be wireless devices included in a communication system.

Each of the first wireless device 100 and the second wireless device 200 includes one or more processors 102 and 202 and one or more memories 104 and 204 and further include one or more transceivers 106 and 206 and/or one or more antennas 108. The processors 102 and 202 may be configured to control the memories 104 and 204 and/or the transceivers 106 and 206 and implement functions, procedures, and/or methods, which will be described/suggested below. For example, the processors 102 and 202 may process information in the memories 104 and 204 to generate first information/signal and transmit a radio signal including the first information/signal via the transceivers 106 and 206. In addition, the processors 102 and 202 may receive a radio signal including second information/signal via the transceivers 106 and 206 and store information obtained by processing the second information/signal in the memories 104 and 204. The memories 104 and 204 may be connected to the processors 102 and 202 and may store various information related to the operations of the processors 102 and 202. For example, the memories 104 and 204 may perform some or all of processes controlled by the processors 102 and 202 or store software code including commands for performing the procedures and/or methods, which will be described/proposed below. Here, the processors 102 and 202 and the memories 104 and 204 may be portions of a communication modem/circuit/chip designed to implement wireless communication technology. The transceivers 106 and 206 may be connected to the processors 102 and 202 and may transmit and/or receive radio signals via one or more antennas 108 and 208. The transceivers 106 and 206 may include a transmitter and/or a receiver.

Although not limited thereto, one or more protocol layers may be implemented by the one or more processors 102 and 202. For example, the one or more processors 102 and 202 may implement one or more layers (e.g., functional layers such as a physical (PHY) layer, a medium access control (MAC) layer, a radio link control (RLC) layer, a packet data convergence protocol (PDCP) layer, a radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present specification. The one or more processors 102 and 202 may generate messages, control information, data, or information according to the functions, procedures, proposals, and/or methods disclosed in the present specification. The one or more processors 102 and 202 may generate signals (e.g., baseband signals) containing PDUs, SDUs, messages, control information, data, or information according to the functions, procedures, proposals, and/or methods disclosed in the present specification and provide the signals to the one or more transceivers 106 and 206. The one or more processors 102 and 202 may receive signals (e.g., baseband signals) from the one or more transceivers 106 and 206 and acquire PDUs, SDUs, messages, control information, data, or information according to the functions, procedures, proposals, and/or methods disclosed in the present specification.

The one or more processors 102 and 202 may be referred to as a controller, a microcontroller, a microprocessor, or a microcomputer. The one or more processors 102 and 202 may be implemented by hardware, firmware, software, or a combination thereof, and the firmware or software may be implemented to include modules, procedures, functions, etc. Firmware or software configured to perform the functions, procedures, proposals, and/or methods disclosed in the present specification may be included in the one or more processors 102 and 202 or stored in the one or more memories 104 and 204 and executed by the one or more processors 102 and 202. The functions, procedures, suggestions, and/or methods disclosed in the present specification may be implemented using firmware or software in the form of code, instructions, and/or sets of instructions.

The one or more memories 104 and 204 may be coupled to the one or more processors 102 and 202 and may store various forms of data, signals, messages, information, programs, codes, instructions, and/or commands. The one or more memories 104 and 204 may be located inside and/or outside the one or more processors 102 and 202. In addition, the one or more memories 104 and 204 may be connected to the one or more processors 102 and 202 using various technologies, such as wired or wireless connections.

The one or more transceivers 106 and 206 may transmit/receive user data, control information, wireless signals/channels, and the like, as described in the methods and/or operational flowcharts of the present specification, to/from one or more other devices. In addition, the one or more processors 102 and 202 may control the one or more transceivers 106 and 206 to transmit/receive user data, control information, or wireless signals to/from one or more other devices. In addition, the one or more transceivers 106 and 206 may be connected to the one or more antennas 108 and 208, and the one or more transceivers 106 and 206 may be configured to transmit and/or receive user data, control information, wireless signals/channels, and the like, as described in the functions, procedures, proposals, methods, and/or operational flowcharts disclosed in the present specification, via the one or more antennas 108 and 208. In the present specification, the one or more antennas may be a plurality of physical antennas or a plurality of logical antennas (e.g., antenna ports). The one or more transceivers 106 and 206 may convert received user data, control information, wireless signals/channels, and the like from RF band signals into baseband signals to process the received user data, control information, wireless signals/channels, and the like using the one or more processors 102 and 202. The one or more transceivers 106 and 206 may convert user data, control information, wireless signals/channels, and the like processed using the one or more processors 102 and 202 from baseband signals to RF band signals. To this end, the one or more transceivers 106 and 206 may include an (analog) oscillator and/or a filter.

In the present specification, the one or more memories 104 and 204 may store instructions or programs, and during execution, the instructions or programs may cause the one or more processors 102 and 202 operably connected to the one or more memories to perform operations according to some embodiments or implementations of the present specification.

In the present specification, a computer-readable (non-transitory) storage medium may store one or more instructions or computer programs, and when executed by the one or more processors, the one or more instructions or computer programs may cause the one or more processors to perform the operations according to some embodiments or implementations of the present specification.

FIG. 2 shows an example of a frame structure available in a 3GPP-based wireless communication system.

The frame structure of FIG. 2 is merely an example, and the number of subframes, the number of slots, and the number of symbols in the frame may be diverse. In some wireless communication systems, an orthogonal frequency division multiplexing (OFDM) numerology (e.g., subcarrier spacing (SCS)) may be set differently between a plurality of cells aggregated to one UE. Accordingly, an (absolute time) duration of a time resource configured with the same number of symbols (e.g., a subframe, a slot, or a transmission time interval (TTI)) may be set differently among aggregated cells. Here, the symbol may include an OFDM symbol (or a cyclic prefix-OFDM (CP-OFDM) symbol) and an SC-FDMA symbol (or a discrete Fourier transform-spread-OFDM (DFT-s-OFDM) symbol). In the present specification, the symbol, the OFDM-based symbol, the OFDM symbol, the CP-OFDM symbol, and the DFT-s-OFDM symbol may be interchangeable.

Referring to FIG. 2, uplink and downlink transmissions are organized in units of frames. Each frame has a duration of T_{f}=(△fₘₐₓ*N_{f}/100)*T_{c}=10 ms, where T_{c} (basic time unit)=1/(△fₘₐₓ*N_{f}), △fₘₐₓ=480*103 Hz, and N_{f}=4096. For reference, the sampling time Tₛ=1/(△f_{ref}*N_{f,ref}), △f_{ref}=15*103 Hz, and N_{f,ref}=2048 Tₛ and T_{c} have a relationship of κ=Tₛ/T_{c}=64. A frame consists of 10 subframes, and a duration of a single subframe, T_{sf}, is 1 ms. The subframes are further divided into slots, and the number of slots in a subframe depends on the subcarrier spacing. Each slot may consist of N^{slot}_{symb} symbols based on a cyclic prefix (CP). For example, in some scenarios, each slot consists of 14 OFDM symbols in the case of a normal CP and 12 OFDM symbols in the case of an extended CP. The numerology depends on the exponentially scalable subcarrier spacing △f=2^{u}*15 kHz. The following table shows the number of OFDM symbols per slot (N^{slot}_{symb}), the number of slots per frame (N^{frame,u}ₛₗₒₜ), and the number of slots per subframe (N^{subframe,u}ₛₗₒₜ) according to the subcarrier spacing △f=2^{u}*15 kHz for the normal CP.

**[Table 1]**

| *u* | *N*^{slot}_{symb} | *N*^{frame,u}ₛₗₒₜ | *N*^{subframe,u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

The following table shows the number of OFDM symbols per slot, the number of slots per frame, and the number of slots per subframe according to the subcarrier spacing △f=2^{u}*15 kHz for the extended CP.

**[Table 2]**

| *u* | *N*^{slot}_{symb} | *N*^{frame,u}ₛₗₒₜ | *N*^{subframe,u}ₛₗₒₜ |
|---|---|---|---|
| 2 | 12 | 40 | 4 |

For a subcarrier spacing configuration u, slots are numbered in increasing order within a subframe as nus ∈ {0, ..., n^{subframe,u}ₛₗₒₜ-1} and in increasing order within a frame as n^{u}_{s,f} ∈ {0, ..., n^{frame,u}ₛₗₒₜ-1}.

Hereinafter, embodiments of the present specification are described by referring to the minimum unit of time for scheduling uplink, downlink, and sidelink transmissions as a slot, but the minimum unit of time for scheduling may be referred to by different terms depending on the wireless communication system. For example, in an LTE-based system, the minimum unit of time for scheduling transmissions is referred to as a subframe or a transmission time interval (TTI), while, in an NR-based system, the minimum unit of time for scheduling is referred to as a slot.

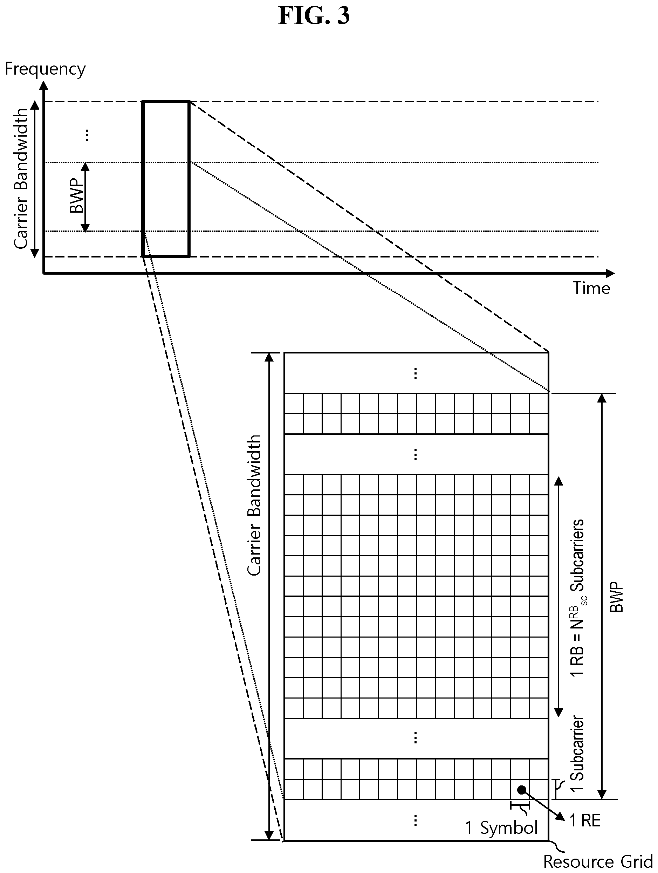

FIG. 3 shows a resource grid of a slot. A slot includes a plurality of symbols (e.g., N^{slot}_{symb}) in a time domain. For each numerology (e.g., a subcarrier spacing) and carrier, a resource grid of N^{size,u}_{grid,x}*N^{RB}_{sc} subcarriers and N^{subframe,u}_{symmb} OFDM symbols starting from a common resource block (CRB) N^{size,u}_{grid} indicated by higher-level layer signaling (e.g., radio resource control (RRC) signaling) is defined. Here, N^{size,u}_{grid,x} is the number of resource blocks (RBs) in the resource grid, and the subscript x is DL for downlink and UL for uplink. N^{RB}_{sc} is the number of subcarriers per RB, and N^{RB}_{sc} is typically 12 in 3GPP-based wireless communication systems. There is one resource grid for a given antenna port p, a subcarrier spacing configuration u, and a transmission direction (DL or UL). A carrier bandwidth N^{size,u}_{grid} for the subcarrier spacing configuration u is provided to the UE by a higher-level layer parameter (e.g., an RRC parameter) from the network. Each element in the resource grid for the antenna port p and the subcarrier spacing configuration u is referred to as a resource element (RE), and each RE may be mapped to one complex-valued symbol. Each RE within the resource grid is uniquely identified by an index k in the frequency domain and an index l indicating a symbol position with respect to a reference point in the time domain. The RBs may be classified into CRBs and physical resource blocks (PRBs). The CRBs are numbered upwards from 0 in the frequency domain for the subcarrier spacing configuration u. The center of subcarrier 0 of CRB 0 for the subcarrier spacing configuration u coincides with "Point A," which is a common reference point for RB grids. The PRBs for the subcarrier spacing configuration u are defined within a bandwidth part (BWP) and are numbered from 0 to N^{size,u}_{BWP,i}-1, where i is the number of the bandwidth part. A relationship between the CRB n^{u}_{CRB} and the PRB n_{PRB} within bandwidth part i is as follows. n^{u}_{PRB}=n^{u}_{CRB}+N^{start,u}_{BWP,i}, where N^{start,u}_{BWP,i} is a CRB in which the bandwidth part starts relative to CRB 0. A BWP includes a plurality of contiguous RBs in the frequency domain. For example, the BWP is a subset of contiguous CRBs defined for a given numerology uⁱ within BWP i on a given carrier. The carrier may include up to N (e.g., 5) BWPs. A UE may be configured to have one or more BWPs on a given component carrier. Data communication is performed through the activated BWPs, and only a preconfigured number (e.g., 1) of BWPs configured for the UE may be activated on the corresponding carrier.

For each BWP, the UE may receive at least one of the following parameters for a serving cell: i) a subcarrier spacing, ii) a CP, iii) assuming that N^{start}_{BWP}=275, CRB N^{start}_{BWP}=O_{carrier}+RBₛₜₐᵣₜ and the number of contiguous RBs N^{size}_{BWP}=L_{RB}, which are provided by an RRC parameter *locationAndBandwidth* indicating an offset RBₛₑₜ and a length LRB as resource indicator values (RIVs), the number of contiguous RBs N^{size}_{BWP}=L_{RB}, and O_{carrier} provided by an RRC parameter *offsetToCarrier* for a subcarrier spacing; indexes within the DL BWPs or UL BWPs; and a set of BWP-common parameters and a set of BWP-dedicated parameters.

Virtual resource blocks (VRBs) are defined within a bandwidth part and are numbered from 0 to N^{size,u}_{BWP,i-1}, where i is the number of the bandwidth part. The UE may assume that the VRBs are mapped to PRBs according to the mapping method indicated to the UE (e.g., non-interleaved or interleaved mapping). When no mapping method is indicated, the UE assumes non-interleaved mapping. In non-interleaved VRB-to-PRB mapping, VRB n may be mapped to PRB n. In interleaved VRB-to-PRB mapping, VRBs may be mapped to PRBs in a distributed manner according to predefined rules.

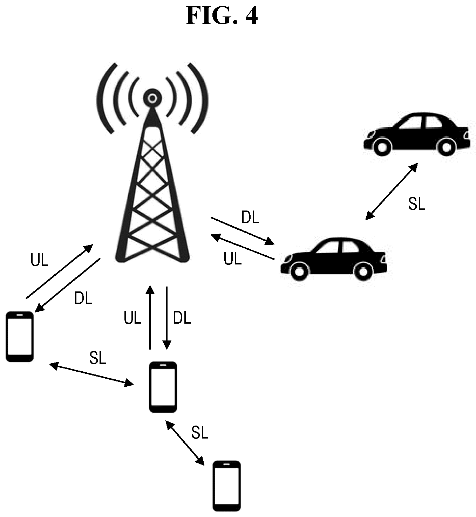

FIG. 4 illustrates communication links in a wireless communication system.

Referring to FIG. 4, in a wireless communication system, a UE receives information from a BS via the DL and transmits information to the BS via the UL. As a solution to address the burden on BSs due to rapidly increasing data traffic, sidelink (SL) communication, which supports direct communication between two or more nearby UEs without passing through a network node using wireless communication technology, has been studied. For UEs inside or outside the coverage of the BS, one UE may transmit data to the other UE via sidelink, which supports UE-to-UE direct communication using sidelink resource allocation modes, physical layer signals/channels, and physical layer processes, without traversing the network.

Transmissions in SL use OFDM waveforms with a CP. The frame structure described in FIG. 2 and the resource grid structure described in FIG. 3 may be applied to the SL. In some scenarios, for example, in NR V2X, only specific slots may be (pre)configured to accommodate SL transmissions, and the available SL resources may consist of (common) RBs within SLs (time resources) and SL BWPs (frequency resources). A subset of the available SL resources may be (pre)configured to be used by several UEs for SL transmissions. This subset of available SL resources is referred to as a resource pool.

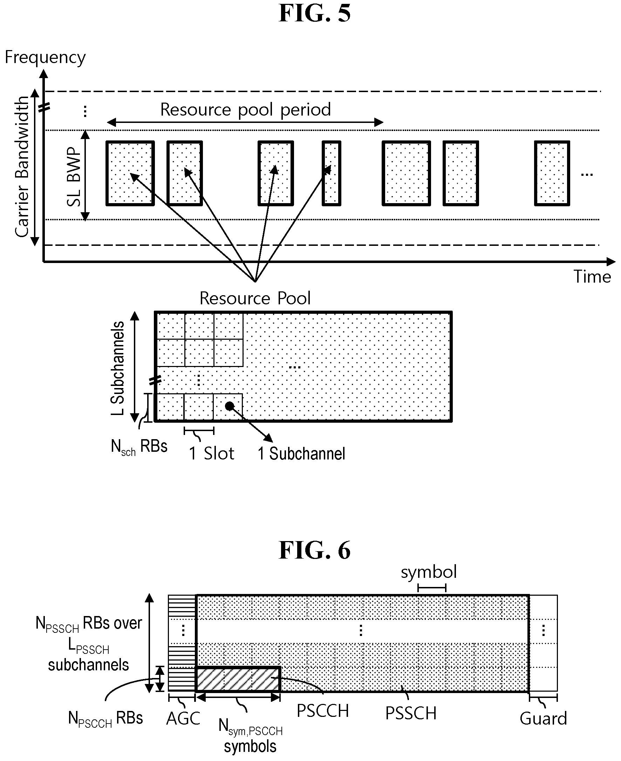

FIG. 5 is a view for describing frequency resources and time resources for a sidelink.

Referring to FIG. 5, the resource pool consists of (preconfigured) i) contiguous PRBs and ii) contiguous or non-contiguous slots for SL transmissions. The concept of the BWP may also be applied to the SL. A UE may be configured with a BWP having a numerology and resource grid for SL transmissions. Hereinafter, the BWP configured for SL transmissions is referred to as an SL BWP. The SL BWP may occupy a contiguous portion of a bandwidth within a carrier. SL transmissions and receptions may occur within the SL BWP. A resource pool may be defined within the SL BWP, and a single numerology is used within the resource pool. The resource pool may be shared by several UEs for SL transmissions and used for all transmission types (e.g., unicast, groupcast, and broadcast). The UE may be configured with one or more SL resource pools via higher-layer signaling (e.g., RRC signaling). The UE may transmit on the SL using its own transmission resource pool(s) and also receive data on resource pools used for SL transmissions by other UE(s).

In the frequency domain, the resource pool is divided into a (pre)configured number L of contiguous subchannels, each of which consists of a group of consecutive RBs within a slot. The number of RBs in a subchannel, N_{sch}, corresponds to the size of the subchannel and is preconfigured for the resource pool. L and N_{sch} may be provided to the UE via higher-layer signaling (e.g., RRC signaling). A first RB of a first subchannel within the SL BWP is preconfigured through the RRC signaling. For example, based on the lowest RB index of the SL BWP, the lowest RB index of the subchannel with the lowest index within the resource pool may be provided to the UE(s). In NR V2X, the size of the subchannel, N_{sch}, may be equal to 10, 12, 15, 20, 25, 50, 70, or 100 RBs. In the SL, a subchannel represents the smallest unit for SL data transmission or reception. The SL transmission may be performed using one or more subchannels.

In the time domain, slots that are a portion of the resource pool are (pre)configured and occur at a preconfigured interval (e.g., every 10240 ms). In each slot of the resource pool, only a subset of consecutive symbols among the N^{slot}_{symb} symbols per slot are (pre)configured for the SL. The subset of SL symbols per slot is indicated by a start symbol and the number of consecutive symbols, which are (pre)configured per resource pool.

3GPP-based communication standards define sidelink physical channels corresponding to resource elements carrying information originating from higher-layers, and sidelink physical signals corresponding to resource elements used by the physical layer but not carrying information originating from higher-layers. For example, a physical sidelink shared channel (PSSCH), a physical sidelink control channel (PSCCH), a physical sidelink broadcast channel (PSBCH), a physical sidelink feedback channel (PSFCH), and the like may be used as sidelink physical channels. In the present specification, the PSCCH carries SL control information (SCI) on the SL. For example, the SCI is used to indicate resources and other transmission parameters used by the UE for the PSSCH, and the PSCCH transmission is associated with a demodulation reference signal (DM-RS). The PSSCH may carry the data payload and additional control information on the SL. Data may be organized in units of transport block (TB), and each TB may be associated with the SCI. For example, the PSSCH is used to carry control information for TB(s), hybrid automatic repeat request (HARQ) processes, and CSI feedback triggering. In some scenarios, at least six OFDM symbols are used for PSSCH transmission within a slot, and the PSSCH is associated with the DM-RS. The PSBCH may carry information to support synchronization on the SL, and in some scenarios, the PSBCH may be transmitted within a sidelink synchronization signal block (S-SSB). The PSFCH carries HARQ feedback on the SL from the intended recipient UE of the PSSCH to the UE performing the PSSCH transmission. Hereinafter, the UE performing the SL transmission is referred to as a TX UE, and the intended recipient(s) of the SL transmission are referred to as an RX UE(s).

In some scenarios, the SCI is transmitted in two stages. For example, in NR V2X, a first-stage SCI may be carried on the PSCCH, and a second-stage SCI may be carried on the corresponding PSSCH. The division of the SCI into the first-stage SCI and the second-stage SCI allows UEs rather than the RX UEs for the SL transmission to decode only the first-stage SCI for channel sensing purposes, that is, to determine resources reserved by other transmissions. Meanwhile, the second-stage SCI provides additional control information required for the RX UE(s) for the SL transmission.

The number of symbols used for the SL transmission within the slot may vary depending on the physical channels carried within the slot.

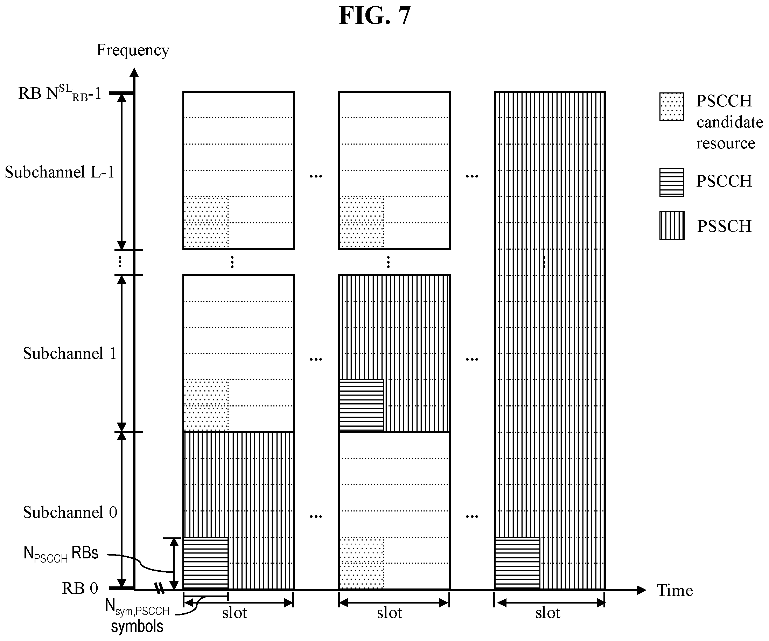

FIGS. 6 and 7 show transmission structures of physical channels within a slot.

The PSCCH may be multiplexed with the associated PSSCH on non-overlapping resources within the same slot. Referring to FIG. 6, the PSCCH is transmitted starting from the lowest RB within the subchannel(s) occupied by the associated PSSCH in the frequency domain and starting from the second symbol within the slot in the time domain. The number of symbols for the PSCCH is (pre)configured per resource pool and may be, for example, 2 or 3 symbols. In some scenarios (e.g., NR V2X), the PSCCH occupies the RBs of the N_{PSCCH} in the frequency domain, and the N_{PSCCH} may be (pre)configured to the UE(s) per resource pool through higher-layer signaling (e.g., RRC signaling). In some scenarios (e.g., NR V2X), the N_{PSCCH} may be configured to be equal to 10, 12, 15, 20, or 25 RBs per resource pool. In some scenarios (e.g., NR V2X), the N_{PSCCH} is contained within a single subchannel, and the number of RBs for the PSCCH, NPSCCH, may be constrained by the number of RBs within the subchannel, N_{sch} (i.e., N_{PSCCH}<=N_{sch}). The PSCCH carries the first-stage SCI including control information associated with the PSSCH and the second-stage SCI. To this end, SCI format 1-A may be used, for example. The first-stage SCI may indicate the frequency resources (e.g., subchannel(s)) of the PSSCH carrying the current (re-)transmission of the TB and indicate resource reservation for up to a predefined number (e.g., 2) of retransmission(s) of the TB. The first-stage SCI may include the priority of the associated PSSCH and include information on the format and size of the second-stage SCI. The first-stage SCI may include information on the modulation and coding scheme (MCS) of the TB carried on the associated PSSCH. Although not illustrated in FIG. 6, a DM-RS associated with the PSCCH (hereinafter, "PSCCH DM-RS") may be transmitted within the PSCCH for demodulation of the PSCCH. For example, each PSCCH symbol (i.e., an OFDM symbol including the PSCCH) may include the PSCCH DM-RS. As not illustrated in FIG. 6, the DM-RS associated with the PSSCH is carried on different symbols within a slot to which the PSSCH is allocated (hereinafter referred to as a "PSSCH slot"). Multiple time patterns may be (pre)configured for the PSSCH DM-RS within a resource pool, and the first-stage SCI may include information on which time pattern is used for the associated PSSCH.

The PSSCH carries a data payload consisting of the second-stage SCI and the TB(s). The second-stage SCI may carry information used to decode the PSSCH and information to support HARQ feedback and CSI reporting. The second-stage SCI may include a Layer 1 source ID representing an identifier (within the physical layer) of a TX UE and a Layer 1 destination ID representing identifier(s) of the intended receiver(s) (RX UE(s)) of the corresponding TB. The second-stage SCI may carry a 1-bit new data indicator (NDI) used to specify whether the TB transmitted on the PSSCH corresponds to a new data transmission or a retransmission. After decoding the first-stage SCI in the PSCCH, the RX UE has the information necessary to decode the second-stage SCI. The second-stage SCI may be decoded using the PSSCH DM-RS. Before being mapped to the PSSCH, the second-stage SCI and the TB are each channel-coded and multiplexed according to a predefined process. Depending on the number of layers (i.e., the number of data streams) supported on the PSSCH, the multiplexed second-stage SCI and TB are mapped to one or two layers and precoded before being mapped to L_{PSSCH} subchannel(s) of the PSSCH. The PSSCH occupies N_{PSSCH}=L_{PSSCH}*N_{sch} RBs starting from the lowest RB in the subchannel carrying the corresponding PSCCH, where the N_{PSSCH} is the number of RBs occupied by the PSSCH, the LPSSCH is the number of subchannels for the PSSCH, and N_{sch} is the number of RBs per subchannel.

Referring to FIG. 6, the PSSCH may be transmitted from a second symbol to the second to last symbol within the slot or from the second symbol to the symbol immediately preceding the last symbol within the slot. In some scenarios, 7 to 14 symbols may be (pre)configured for SL within the slot, and the PSCCH may be transmitted in 5 to 12 consecutive symbols. The number of symbols occupied by the PSSCH depends on the number of SL symbols allocated within the slot and whether the PSFCH is transmitted from that slot. Within the symbols carrying the PSCCH, the PSSCH may be multiplexed with the PSCCH in the frequency domain (when the PSCCH does not occupy the entire L_{PSSCH} subchannel(s)). The second symbol within the slot (i.e., the first symbol including the PSCCH or the PSCCH/PSSCH) may be duplicated into the first symbol of the slot for automatic gain control (AGC) purposes. Additionally, the symbol after the last symbol with the PSSCH may be used as a guard symbol.

FIG. 6 illustrates a SL transmission structure in which the PSCCH occupies three symbols in the time domain and 14 symbols in a slot consisting of 14 symbols are used for the PSCCH/PSSCH transmission, but the PSCCH may occupy two symbols, or some leading symbols within the slot may be used for the PSCCH/PSSCH transmission and the remaining symbols may be used for the PSFCH or for additional guard symbols.

Referring to FIG. 7, in some scenarios (e.g., NR V2X), for a resource pool having L subchannels, there are L possible PSCCH positions within the slot, starting from the second SL symbol within the slot and from the lowest RB within each subchannel. That is, for the resource pool having the L subchannels, L PSCCH candidate resources may be present in each slot. Accordingly, in some scenarios, to receive the first-stage SCI, the UE needs to identify (or monitor) L possible PSCCH positions in each slot within the resource pool.

Referring to FIGS. 6 and 7, in some scenarios (e.g., NR V2X), the UE receives the number of symbols for the PSCCH, N_{sym,PSCCH}, and the number of RBs for the PSCCH, N_{PSCCH}, for the resource pool via higher-layer signaling (e.g., RRC signaling), and the PSCCH starts from the second symbol available for SL transmissions within the slot and is transmitted on N_{PSCCH} RBs, starting from the lowest RB of the lowest subchannel of the associated PSSCH within Nsym,_{PSCCH} symbols.

The UE may be configured with one or more SL resource pools via higher-layer signaling (e.g., RRC signaling). A SL resource pool may be used for transmitting or receiving the PSSCH. In some scenarios, the PSSCH is transmitted in the same slot as the associated PSCCH. In some scenarios, the minimum resource allocation unit for the PSSCH in the time domain is a slot. The PSSCH transmitted in the consecutive symbols within the slot is not transmitted in symbols not configured for the SL. The index of the first symbol among the consecutive symbols that may be used for the SL and the number of consecutive symbols that may be used for the SL may be provided to the UE(s) through the higher-layer signaling (e.g., RRC signaling). The UE does not transmit the PSSCH in the last symbol configured for the SL, and the last symbol may be used as a guard symbol. In some scenarios, the minimum resource allocation unit for the PSSCH in the frequency domain is a subchannel.

Referring to FIG. 7, when the PSCCH is transmitted/received in a PSCCH resource candidate of the slot within the resource pool, the PSSCH associated with the PSCCH is transmitted/received within consecutive symbols within the slot in the time domain and transmitted/received on L_{PSSCH} subchannels having the subchannel on which the PSCCH is transmitted/received as the lowest subchannel in the frequency domain. When the PSSCH occupies a plurality of subchannels, the PSCCH resource candidate(s) of the remaining subchannel(s) rather than the lowest subchannel among the plurality of subchannels are used for transmitting the PSSCH. The PSCCH resource candidate(s) of the subchannel(s) not used for transmitting the PSSCH in a slot within the resource pool are also not used for PSCCH transmission. The RX UE may attempt to detect a PSCCH from the PSCCH resource candidates, and when detecting the PSCCH in the slot, may consider the lowest RB in which the PSCCH is detected as the lowest RB of the PSSCH based on the SCI carried by the PSCCH, and receive the PSSCH on N_{PSSCH}=L_{PSSCH}*N_{sch} RBs, starting from the lowest RB.

As the need for vehicle-to-everything (V2X) communication, which is a communication technology that supports wired/wireless communication between vehicles and other vehicles, infrastructure, networks, or pedestrians, arises, a rapid increase in SL communication is anticipated. To stably support the SL communication, it may be considered to support the SL communication both in a licensed spectrum, which is licensed to a specific network operator and may be used exclusively or preferentially by the network operator, but also in a shared spectrum (i.e., unlicensed spectrum), which is not licensed to the specific network operator and may be freely used by multiple network operators. However, to support the SL communication in the shared spectrum, there is a need for a method for coexistence with the SL communication in the shared spectrum. Hereinafter, 3GPP-based communication technologies applicable to uplink and/or downlink communication between UEs and BSs in the shared spectrum will be described.

Unless otherwise stated, the following definitions may be applied to terms related to the shared spectrum in the present specification.
- Channel: consists of contiguous RBs on which a channel access procedure is performed in the shared spectrum and may refer to a carrier or a portion of the carrier.
- Channel access procedure (CAP) refers to a procedure of assessing channel availability based on sensing to determine whether to use channels prior to signal transmission. The BS or UE senses the channel during a sensing slot section, and when the detected power is less than an energy detection threshold value for at least a preconfigured time within the sensing slot section, the sensing slot section is considered idle or free, and otherwise, the sensing slot section is considered busy. The CAP may be referred to as listen-before-talk (LBT).
- Channel occupancy refers to the transmission or transmissions on the channel or channels by the BS/UE after performing the CAP.
- Channel occupancy time (COT) refers to the total time that the BS/UE and any BS/UE or any BSs/UEs sharing the channel occupancy may perform transmission or transmissions on the channel after the BS/UE performs the CAP. The COT may be shared for transmissions between the BS and the corresponding UE or UEs.

In some scenarios, when *IntraCellGuardBandsPerSCS* is configured for a carrier with SCS configuration u in the shared spectrum, the UE receives N_{RB-set}-1 intra-cell guard bands on the carrier, and each intra-cell guard band is defined by a starting RB GB^{start,u}ₛ and a size G^{size,u}ₛ in terms of the number of RBs, in which GB^{start,u}ₛ and GB^{size,u}ₛ are determined by higher-layer parameters provided to the UE from the BS, s∈{0,1,..., N_{RB-set}-2}. The intra-cell guard bands separate N_{RB-set} RB sets, and each of the RB sets is defined by a starting RB (RB^{start,u}s) and an ending RB (RB^{end,u}ₛ). For s∈{0,1,..., N_{RB-set}-1}, the starting RB index RB^{start,u}ₛ and the ending RB index RB^{end,u}ₛ may be determined by the following equations, respectively. [Equation 1] ${RB}_{s}^{start , μ} = {N}_{grid}^{start , μ} + \left\{\begin{matrix}0 & s = 0 \\ {GB}_{s - 1}^{start , μ} + {GB}_{s - 1}^{size , μ} & otherwise\end{matrix}\right.$ [Equation 2] ${RB}_{s}^{end , μ} = {N}_{grid}^{start , μ} + \left\{\begin{matrix}{N}_{grid}^{size , μ} - 1 & s = {N}_{RB - set} - 1 \\ {GB}_{s}^{start , μ} - 1 & otherwise\end{matrix}\right.$

The RB set of index s consists of RB^{size,u}ₛ resource blocks, in which RB^{size,u}ₛ=RB^{end,u}ₛ-RB^{start,u}ₛ+1. When the UE is not configured with *IntraCellGuardBandsPerSCS* for u, the UE determines the RB indices and corresponding RB set(s) for the intra-cell guard band(s) according to the nominal intra-cell guard band(s) and RB pattern corresponding to u and the carrier size N^{size,u}_{grid}. When the nominal intra-cell guard band and the RB set pattern do not include any intra-cell guard bands, the number of RB sets for the carrier, N_{RB-set}=1.

When the UE receives, on a carrier with an SCS configuration of µ, the number of RBs equal to 0 for all intra-cell guard band(s), the UE is indicated that no intra-cell guard band is configured for the cell and expects N_{RB-set}>1.

Since the shared spectrum is not dedicated to a specific network operator, the BS and the UE may apply LBT before performing the transmission on the cell configured with shared spectrum channel access. When the LBT is applied, the transmitter listens to/senses the channel to determine whether the channel is free or busy and performs transmission only when the channel is considered free. That is, for the shared spectrum, a communication device needs to determine whether to use the channel of other communication devices before signal transmission.

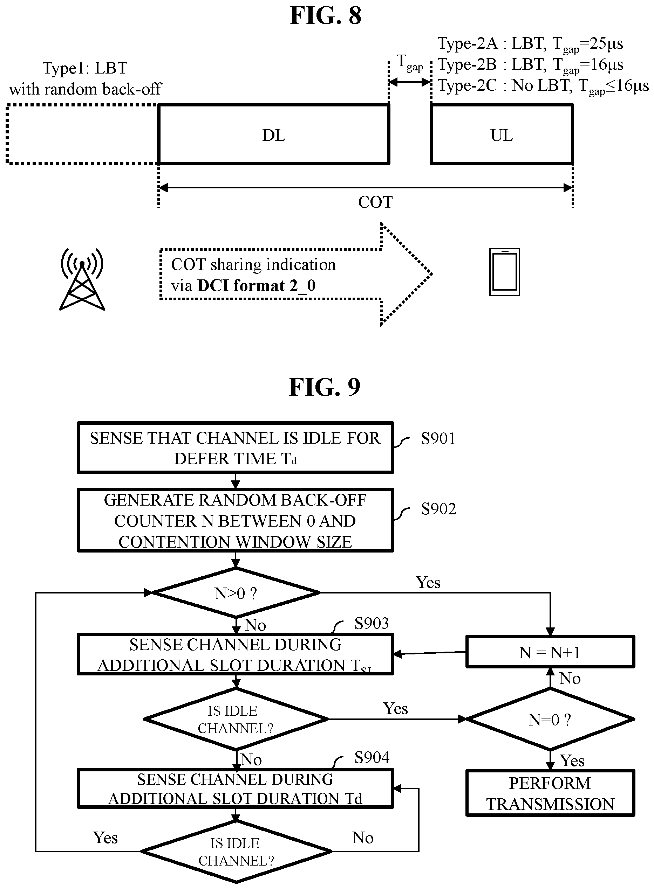

FIG. 8 is a view for describing a channel access mechanism on a shared spectrum according to some embodiments.

In 3GPP-based systems, channel access in the downlink and uplink relies on LBT. The UE and the BS need to first sense the communication channel to detect that there is no communication prior to transmission. When the communications channel is an unlicensed band with a wide bandwidth, the channel sensing process relies on detecting energy levels on multiple subbands of the communications channel. LBT parameters, such as channel assessment parameters, may be configured for the UE by the BS.

In some embodiments, the channel access mechanism for a cell configured for shared spectrum channel access, that is, the LBT mechanism, may be generally classified into a Type 1 channel access process and a Type 2 channel access process.

FIG. 9 shows a flow of a channel access process. In particular, FIG. 9 shows a flow of the Type 1 channel access process.

The Type 1 channel access process is a counter-based random back-off channel access mechanism. The UE/BS intending to perform transmission performs LBT for sensing an idle channel on a cell in the shared spectrum. When sensing that the channel is idle for a defer time T_{d} (S901), the UE/BS generates a random back-off counter N between 0 and a contention window size (S902). The contention window size is adjusted based on HARQ-ACK and a priority access class. When the counter is 0 and the UE/BS has not performed a transmission, the UE/BS performs additional short LBT before the transmission for an additional slot duration Tₛₗ and an additional slot duration T_{d} (S903, S904). A duration of the additional short LBT is 43 µs, 52 µs, or 88 µs depending on channel access priority class (CAPC) levels. For example, T_{d}=T_{f}+mₚ*Tₛₗ, in which mₚ is determined based on the CAPC. T_{f} may be, for example, 16 µs, and Tₛₗ may be 9 µs. The shared spectrum channel access of NR introduces mini-slot level channel access to increase the number of transmissions and supports back-to-back transmissions during COT when a type gap between two consecutive transmissions is not longer than 16 µs.

The shared spectrum channel access of NR (hereinafter referred to as "NR-U") supports COT sharing. Different devices (e.g., UE/BS, UE, BS) may alternately use the medium/channel under the condition that activity gaps between transmissions are maintained. For example, when the UE/BS initiates COT through the Type 1 channel access process, resources within the COT may be not only used for transmission by the UE/BS, but also shared for transmission by the BS/UE(s). The NR-U supports Type 2 LBT for COT sharing. When the resources within the COT initiated through the Type 1 channel access process performed on the device are shared by another device, another device may use Type-2A channel access, Type-2B channel access, or Type-2C channel access; for these channel access types, there are specific gap limits between two adjacent transmissions; and according to the specific gap limits, the Type 2 channel transmission may be classified into the Type-2A channel access, the Type-2B channel access, and the Type-2C channel access. In the case of Type-2A channel access, the UE/BS performs channel-sensing for a duration of 25 µs before initiating transmission, and performs transmission after the channel-sensing is successful. For the Type-2B channel access, the UE/BS performs channel sensing for a duration of 16 µs before initiating transmission, and performs the transmission after the channel sensing is successful, in which a gap between a start position of the transmission and an end position of a previous transmission is 16 µs. For the Type-2C channel access, the UE may perform transmission immediately without channel sensing after the gap ends, in which a gap between a start position of the transmission and an end position of a previous transmission may be less than or equal to 16 µs.

Type 2 LBT, that is, a gap for Type 2 channel access, may be controlled by the BS through LBT type indication (i.e., channel access type indication) and CAPC indication within DCI. For example, for a UE's UL transmission burst occurring within a COT shared by a BS, when a start time position of a UL transmission and an end time position of a previous DL transmission burst are less than or equal to 16 µs, the BS may perform Type-2C channel access on the UE prior to the UL transmission burst.

To enable dynamic TDD on the shared spectrum, the UE/BS determines when and where to transmit and/or receive based on the indications of the COT structure. The COT includes a plurality of slots, each of which may include downlink resources, uplink resources, or flexible resources. The COT structure reduces power consumption and a channel access delay. In some scenarios (e.g., NR), the COT is typically about 8 ms, and the COT duration and RB sets available within the COT duration may be indicated by DCI format 2_0. A higher-layer parameter *availableRB-SetsToAddModList* and a higher-layer parameter *co-DurationsPerCellToAddModList* may be configured by the BS. The following is an example of a portion of the information element (IE) *SlotFormatIndicator* including *availableRB-SetsToAddModList* and *co-DurationsPerCellToAddModList*. In some scenarios, the IE *SlotFormatIndicator* is used to configure monitoring of group-common-PDCCH for slot format indicators (SFIs).

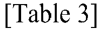

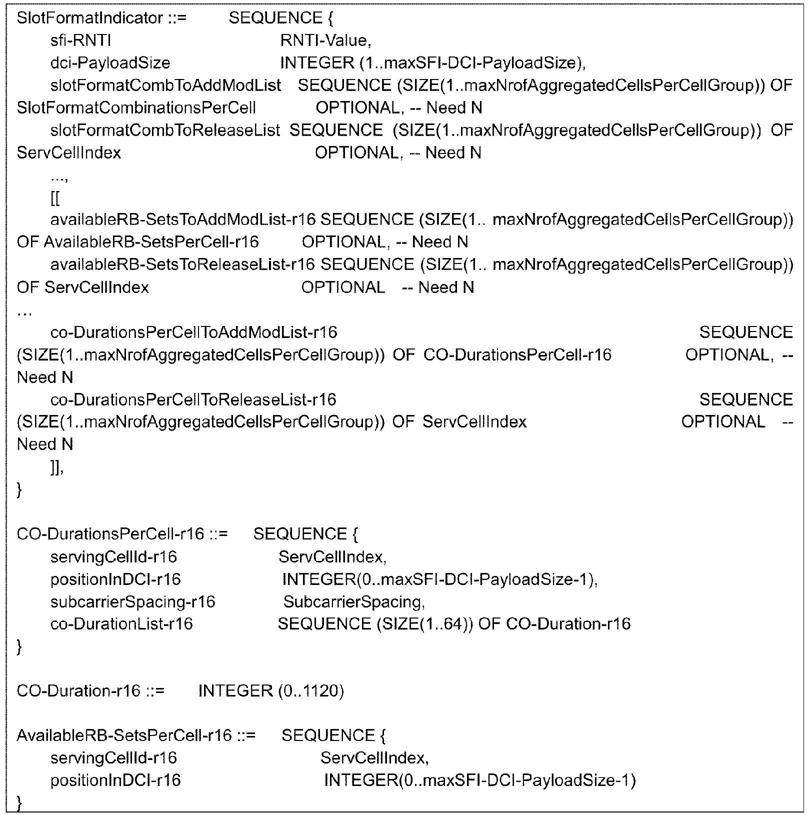

In the above table, *sfi-RNTI* is a parameter used to configure the RNTI used for an SFI on a given cell, and *dci-PayloadSize* is a parameter used to configure a total length of a DCI payload scrambled by the SFI-RNTI. *slotFormatCombToAddModList* is a list of SlotFormatCombinations for a UE's serving cells, in which each SlotFormatCombination is a parameter used to configure slot formats occurring in consecutive slots in time-domain order as listed in the corresponding SlotFormatCombination, and slotFormatCombToReleaseList is a list of SlotFormatCombinations to be released.

*availableRB-SetsToAddModList* is a list of *AvailableRB-SetsPerCell* object(s), in which the *AvailableRB-SetsPerCell* object includes a parameter *servingCellId,* which indicates an ID of a cell to which the corresponding configuration is applicable, and a parameter *positionInDCI,* which indicates (start) positions of bits within a DCI payload indicating the availability of the serving cell's RB sets. For the serving cell, the UE receives a position of the available RB set indicator within the DCI format 2_0 through the parameter *positionInDCI.* The position of the available RB set indicator within the DCI format 2_0 is:
i) 1 bit when the UE is indicated that no intra-cell guard bands are configured for the serving cell, in which a value of "1" at the position indicates that the serving cell is available for receptions, a value of "0" at the position indicates that the serving cell is not available for receptions, and the serving cell remains available or unavailable for receptions until the end of the remaining COT.
ii) a bitmap of N_{RB-set} bits having a one-to-one mapping with RB sets of the serving cell when the UE is indicated that intra-cell guard band(s) are configured for the serving cell, in which the N_{RB-set} is the number of RB sets in the serving cell, a value of '1' in the bitmap indicates that the corresponding RB set is available for receptions, a value of '0' in the bitmap indicates that the corresponding RB set is not available for receptions, and each RB set remains available or unavailable for receptions until the end of the remaining COT.

*co-DurationsPerCellToAddModList* is a list of *CO-DurationsPerCell* object(s), in which each *CO-DurationsPerCell* object includes a parameter *servingCellId* indicating an ID of a cell to which the configuration is applicable, a parameter *positionInDCI* indicating a position in DCI of a bit field indicating a channel occupancy duration for serving cells of the UE, a parameter *subcarrierSpacing* indicating a reference subcarrier spacing for a list of channel occupancy durations, and *co-DurationList* indicating the list of channel occupancy durations in units of symbols.

In some embodiments, referring to FIG. 9, the RB sets available for COT sharing and the COT may be notified to the UE(s) via the DCI format 2_0 with a cyclic redundancy check (CRC) scrambled by SFI-RNTI.

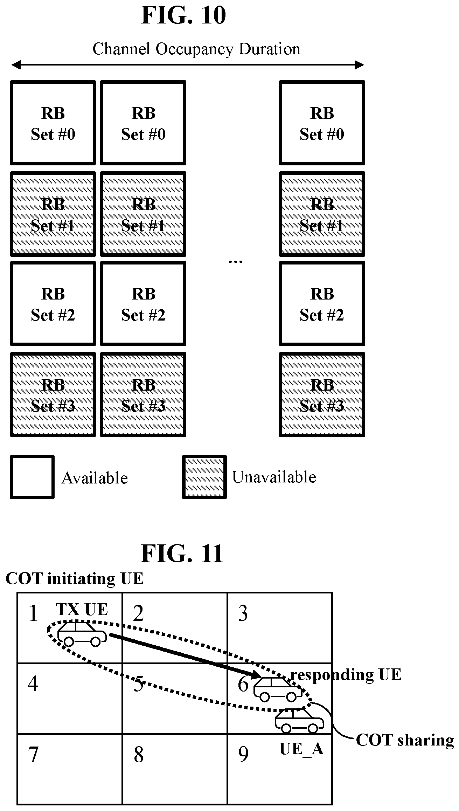

FIG. 10 shows COT sharing between the BS and the UE.

When the higher-layer parameter *availableRB-SetsToAddModList* is configured, the following information may be transmitted via the DCI format 2_0: Available RB set indicator 1, Available RB set indicator 2, ..., Available RB set indicator N1.

When the higher-layer parameter *co-DurationsPerCellToAddModList* is configured, the following information may be transmitted via the DCI format 2_0: COT duration indicator 1, COT duration indicator 2, ..., COT duration indicator N2.

For example, referring to FIG. 10, in a state in which, among the bit fields in the DCI format 2_0, a position of the COT duration indicator 1 is configured, by the parameters *servingCellId* and *positionInDCI* in a *CoDurationsPerCell* object, as a bit field for a serving cell having a serving cell index of 1, and a reference subcarrier spacing for the serving cell is configured as 15 kHz by subcarrierSpacing, when the bit field corresponding to the COT duration indicator 1 in the DCI format 2_0 transmitted by the BS to UE(s) includes a bit value indicating 280, the UE(s) detecting the DCI format 2_0 may assume that a COT of 280 OFDM symbols, based on a subcarrier spacing of 15 kHz, is initiated by the BS for the serving cell. When, among the bit fields in the DCI format 2_0, the position of the available RB set indicator 1 is configured, by *AvailableRB-SetsPerCell*, to include a bitmap for a serving cell having a serving cell index of 1, and when the serving cell includes four RB sets and the available RB set indicator 1 includes a bitmap of '1010,' the RB sets in the serving cell may be shared by the BS and the UE during the COT, as shown in FIG. 10.

As described above, to ensure stable support of the SL communication, it may be considered to support the SL communication in the shared spectrum. The SL BWP and SL resource pool described in the SL of the 3GPP-based system and the RB sets described in the shared spectrum transmission of the 3GPP-based system may be reused for SL transmission on the shared spectrum. Hereinafter, the shared spectrum supporting SL transmission is referred to as SL-U. Hereinafter, the implementations of the present specification that support coexistence between UL/DL transmission and SL transmission in the shared spectrum will be described.

In some implementations of the present specification, one or more SL BWPs may be (pre-)configured within a carrier on the shared spectrum. In some implementations of the present specification, the SL BWP may be (pre-)configured to include one or more SL resource pools. In some implementations of the present specification, at least one resource pool may be (pre-)configured to include an integer number of RB sets. Here, the RB set may correspond to about 20 MHz. In some implementations of the present specification, when a resource pool includes two adjacent RB sets, the RB(s) within the intra-cell guard band of the two adjacent RB sets may be defined as belonging to the resource pool. In some implementations of the present specification, interlaced RB-based transmission may be configured for PSCCH/PSSCH transmission for the SL BWP. When the UE is not configured to use interlaced RB-based PSCCH/PSSCH transmission for the SL BWP or when contiguous-RB-based transmission is configured, the UE may perform PSCCH/PSSCH transmission using the contiguous-RB-based transmission.

LBT is also required for SL transmission in the SL-U. The Type 1 SL channel access process is applicable to PSCCH/PSSCH transmission(s) and other SL transmissions, including S-SSB and PSFCH transmissions. Type-2A/2B/2C SL channel access processes are applicable in the following cases:
> Type-2A is applicable when the gap is at least 25 µs.
> Type-2B is applicable when the gap is at least 16 µs.
> Type-2C is applicable for a gap less than or equal to 16 µs, and a transmission duration is at most 584 µs.

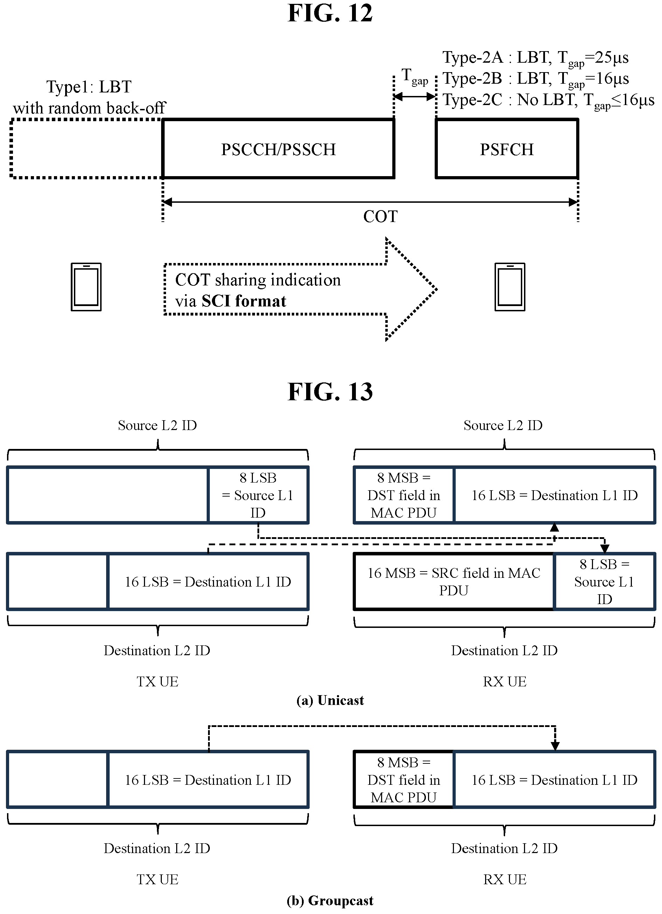

FIGS. 11 and 12 show UE-to-UE COT sharing that may be used for sidelink communication.

In the case of conventional communication over a shared spectrum, COT sharing may be initiated by a BS, and all UEs that receive a DCI format (e.g., a DCI format 2_0) including COT sharing information transmitted by the BS may share the COT. Since UE-to-UE sharing involves the COT-initiating UE performing the sharing using only interference information from its own surroundings, when the COT is shared with an unspecified number of UEs, unexpected interference problems may occur due to the interference environment surrounding each UE different from the interference environment surrounding the COT-initiating UE. Accordingly, in some embodiments, as shown in FIG. 11, UE-to-UE COT sharing is performed such that the channel occupancy state determined by the COT-initiating UE, which is the subject of sensing, is shared only with the UE(s) with which the COT-initiating UE intends to communicate.

Referring to FIG. 12, the UE-to-UE COT sharing may be supported at a sidelink. For S-SSB/PSFCH/PSSCH/PSCCH transmission(s), the responding UE may use the COT shared by the COT initiating UE (using a Type 1 channel access) within the RB set(s) corresponding to the shared COT. In the present specification, the COT initiating UE is a UE performing a Type 1 channel access process, and the responding UE, as a UE receiving PSCCH/PSSCH from the COT initiating UE, may be a UE sharing the COT initiated by the COT initiating UE with the COT initiating UE. SL transmission(s) from the responding UE within the shared COT may be performed when the CAPC value(s) of the SL transmission(s) have a CAPC value that is less than or equal to the CAPC value indicated in the SCI format including the corresponding COT sharing indication.

In some embodiments of the present specification, the SCI format may be used to transmit COT sharing information. For example, SCI format 2-A, SCI format 2-B, or SCI format 2-C may include the following sidelink transmission information:
> HARQ process number - 4 bits.
> New data indicator - 1 bit
> Redundancy version - 2 bits
> Source ID - 8 bits
> Destination ID - 16 bits
> HARQ feedback enabled/disabled indicator - 1 bit
> Cast type indicator - 2 bits

The cast type indicator may include values according to the following table.

**[Table 4]**

| Value of Cast type indicator | Cast type |
|---|---|
| 00 | Broadcast |
| 01 | Groupcast |
| | when HARQ-ACK information includes ACK or NACK |
| 10 | Unicast |
| 11 | Groupcast |
| | when HARQ-ACK information includes only NACK |

In some embodiments of the present disclosure, for example, a responding UE for a shared COT may be a receiving UE that is a target of PSCCH/PSSCH transmission of a COT-initiating UE: i) in the case of unicast, when source and destination IDs included in SCI of the COT-initiating UE match corresponding destination and source IDs associated with the same unicast at the receiving UE within the same COT; and ii) in the case of groupcast and broadcast, when a destination ID included in the SCI of the COT-initiating UE matches a destination ID known to the receiving UE. In some embodiments of the present specification, the responding UE to a shared COT may be a UE identified by ID(s) when additional IDs (in addition to the source and destination IDs of the PSCCH/PSSCH transmission) are included in the COT sharing information from the COT initiating UE. Hereinafter, the additional ID may be a source ID and/or destination ID additionally included in the SCI format, in addition to the source ID and destination ID transmitted in the 2nd-stage SCI format, SCI Format 2-A, SCI Format 2-B, or SCI Format 2-C.

FIG. 13 shows a relationship between identifiers of a transmitting UE and identifiers of a receiving UE. In FIG. 13, L1 denotes Layer-1 and L2 denotes Layer-2.

Each UE is assigned one or more Layer-2 IDs consisting of source Layer-2 ID(s) and destination Layer-2 ID(s), and the Layer-2 ID is determined according to a V2X communication mode.

A transport block carried by the PSSCH may correspond to a MAC PDU at a MAC layer, and the MAC PDU may include a MAC SDU including SL-SCH data and a MAC subheader for the MAC SDU. The MAC subheader includes an SRC field and a DST field and carries 16 most significant bits (MSBs) of a source Layer-2 ID set with an identifier provided by a higher layer than the MAC layer in a protocol stack, and the DST field carries 8 MSBs of the destination Layer-2 ID set with the identifier provided by the higher layer than the MAC layer.

When a transmitting (TX) UE performs a transmission, the (8-bit) source Layer-1 ID is determined to be the 8 LSBs of the source Layer-2, and the (16-bit) destination Layer-1 ID is determined to be the 16 LSBs of the destination Layer-2 ID. For example, a TX UE sets, among sidelink transmission information of a transport block (TB) for a source and destination pair of a MAC PDU to be transmitted, a source Layer-1 ID (e.g., a source ID in SCI format 2-A) to the 8 least significant bits (LSBs) of a source Layer-2 ID of the MAC PDU, and sets a destination Layer-1 ID (e.g., a destination ID in SCI format 2-A) to the 16 LSBs of a destination Layer-2 ID of the MAC PDU.

When a receiving (RX) UE performs reception, the RX UE acquires the source Layer-1 ID and the destination Layer-1 ID from a second-stage SCI format (e.g., SCI format 2-A).

Referring to FIG. 13A, in the case of unicast, the RX UE determines whether 16 LSBs among source Layer-2 IDs of the RX UE are identical to the destination Layer-1 ID acquired by the RX UE, and determines whether 8 LSBs among destination Layer-2 IDs of the RX UE are the same as the source Layer-1 ID acquired by the RX UE. When the 16 LSBs of the source Layer-2 ID of the RX UE are the same as the acquired destination Layer-1 ID and the 8 LSBs of the destination Layer-2 ID of the RX UE are the same as the source Layer-1 ID acquired by the RX UE, the RX UE may perform decoding for the received PSSCH to acquire the transport block. For example, when the transport block is associated with unicast, and a DST field of a MAC PDU subheader decoded by the UE matches 8 most significant bits (MSBs) of any one of source Layer-2 ID(s) of the UE and 16 LSBs match a destination ID in the corresponding SCI, and a SRC field of the decoded MAC PDU subheader matches 16 MSBs of any one of destination Layer-2 ID(s) of the UE and 8 LSBs match a source ID in the corresponding SCI, the UE may determine that it is a target UE of the transport block.

Referring to FIG. 13B, in the case of groupcast, the RX UE may determine whether 16 LSBs among destination Layer-2 IDs of the RX UE are the same as the destination Layer-1 ID acquired by the RX UE, and if so, the RX UE may decode the received PSSCH to acquire the transport block. For example, when the transport block is associated with groupcast, and a DST field of a MAC PDU subheader decoded by the UE matches 8 MSBs of any one of destination Layer-2 ID(s) of the UE and 16 LSBs match a destination ID in the corresponding SCI, the UE may determine that it is one of target UEs of the transport block.

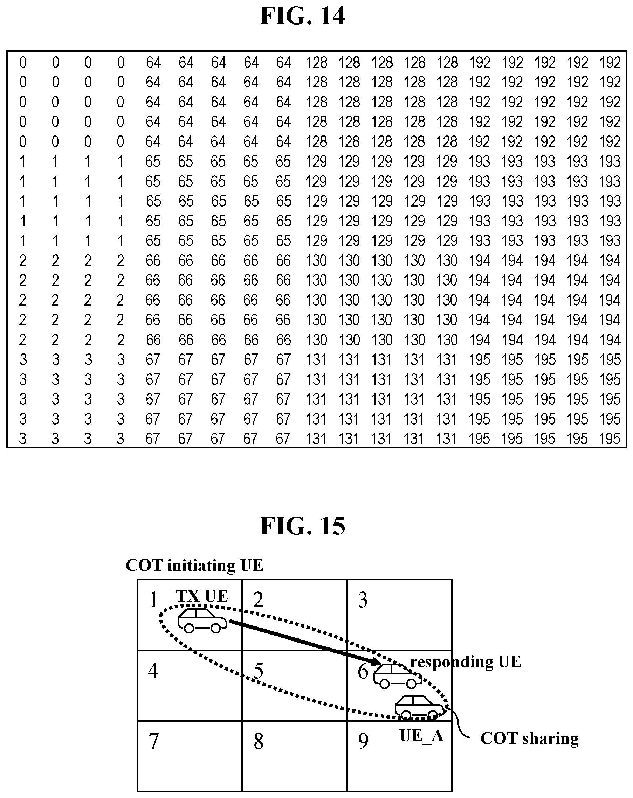

FIG. 14 shows zone identifiers (IDs).

In conventional SL communication, the zone ID of the TX UE could be transmitted via SCI Format 2-B, which is a format of the second-stage SCI carried by the PSSCH. SCI Format 2-B includes the required communication range and the zone ID of the TX UE. The zone ID field within SCI Format 2-B indicates the zone in which the TX UE is positioned. The zone ID is indicated by, for example, 12 bits, and a given area may be divided into 212 squared regions of the same size. The required communication range may be represented by 4 bits using a set of 16 (pre)set values selected from a defined set of possible values. The defined set of possible values may include the following: 20, 50, 80, 100, 120, 150, 180, 200, 220, 270, 300, 350, 370, 400, 420, 450, 500, 600, 700, 1000 m. When the RRC configuration *sl-ZoneConfig* is configured by the network, the UE may determine the ID of the zone in which the TX UE is positioned (i.e., Zone ID) using the following equations:
${x}_{1} = Floor \left(x/L\right) mod 64 ;$
${y}_{1} = Floor \left(y/L\right) mod 64 ;$
$Zone_ID = {y}_{1} * 64 + {x}_{1}$
in which L denotes a value of *sl-ZoneLength*, which represents the length of each geographic zone included in *sl-ZoneConfig*; x denotes a geodesic distance (represented in meters) in longitude between the UE's current position and geographic coordinates (0, 0); and y denotes a geodesic distance (represented in meters) in latitude between the UE's current position and the geographic coordinates (0, 0).

The UE-to-UE COT sharing described with reference to FIG. 11 or 12 is highly restrictive and inefficient because COT sharing with UEs other than the responding UE is not permitted. For example, referring to FIG. 11, even when a UE (e.g., UE_A in FIG. 11) is positioned close to the responding UE for the COT-initiating UE, the COT of the COT-initiating UE may not be shared with the UE_A when the UE_A is not the responding UE. Hereinafter, some embodiments of the present specification to solve these problems will be described.

FIG. 15 is a view for describing the concept of UE-to-UE COT sharing according to some embodiments of the present specification.

In some embodiments of the present specification, which will be described below, UE-to-UE COT sharing may be performed based on UE location information. For example, in some embodiments of the present specification, referring to FIG. 15, a COT initiated by a COT initiating UE is shared not only with a responding UE to the COT initiating UE, but also with another UE (e.g., UE_A in FIG. 15) near the responding UE. In some embodiments of the present specification, which will be described below, UE-to-UE sharing based on UE location information allows more UEs to share the COT. In the following description, the following is assumed:
> COT sharing information (COT-SI) includes the CAPC used to initiate the COT, source and destination Layer-1 IDs, time domain information of the shared COT (e.g., COT duration), and frequency domain information of said shared COT (e.g., available RB set(s)).
> The COT-SI is included in a first-stage SCI format and/or a second-stage SCI format.
> The indicated COT may be shared by the responding UE when CAPC value(s) of SL transmission(s) of the responding UE are less than or equal to the CAPC value indicated in the SCI format including the COT-SI (or, when the SCI format including the COT-SI is carried by the PSSCH, the SCI format scheduling the PSSCH).

In some embodiments of the present specification, the COT-SI includes the zone ID of the COT initiating UE and the zone ID of the responding UE. Hereinafter, the zone ID of the transmitting UE (TX UE) performing the SL transmission is denoted as ZoneID_TX, and the zone ID of the receiving UE (RX UE) of the SL transmission is denoted as ZoneID_RX. The zone ID(s) are included in the first-stage SCI format and/or the second-stage SCI format. UEs according to some embodiments of the present specification may perform a location-based COT sharing procedure using zone ID(s) included in the COT-SI. For example, referring to FIG. 15, UE_A may decode an SCI format including the COT-SI and identify ZoneID_TX and ZoneID_RX within the COT-SI. The UE_A may compare the ZoneID_A of the UE_A with ZoneID_RX and/or ZoneID_TX within the COT-SI. When ZoneID_A is the same as ZoneID_TX or ZoneID_RX, the COT indicated by the COT-SI may potentially be shared with the UE_A.

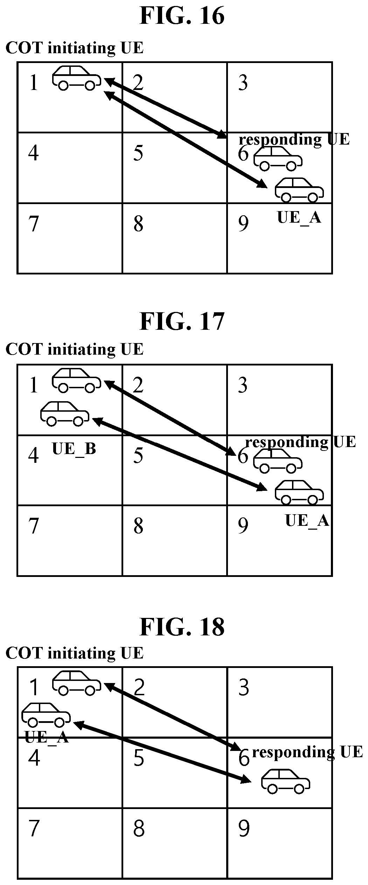

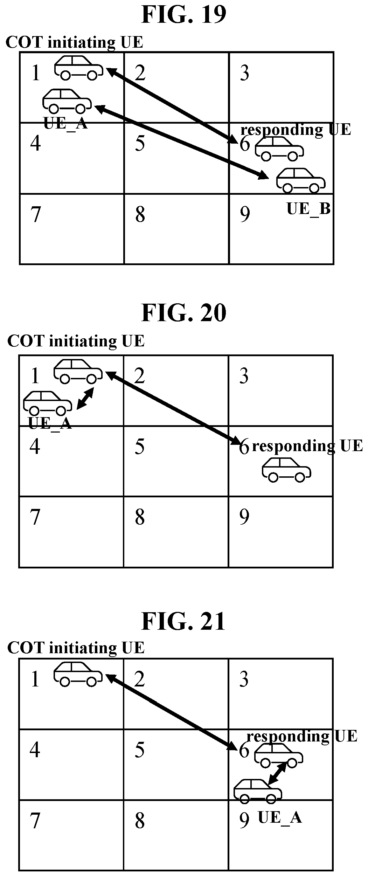

FIGS. 16 to 21 show location-based COT sharing according to some embodiments of the present specification. In the examples of FIGS. 16 to 21, ZoneID_A is the zone ID of the UE_A, ZoneID_B is the zone ID of the UE_B, and the UE_A is not the response UE of the COT initiating UE, but shares the COT of the COT initiating UE.
* Case 1. Unicast with the COT initiating UE: Referring to FIG. 16, when ZoneID_A is the same as ZoneID_RX in the COT-SI and the source ID included in the SCI format of the COT initiating UE matches the corresponding destination ID of the UE_A, the COT indicated by the COT-SI may be shared with the UE_A, which belongs to the same zone as the response UE of the COT initiating UE, for unicast with the COT initiating UE. For example, in Case 1, the UE_A may transmit a transport block to the COT initiating UE within the COT together with an SCI format including a cast type field set to unicast, or the COT initiating UE may transmit a transport block to the UE_A within the COT together with an SCI format including a cast type field set to unicast.
* Case 2. Unicast with a UE other than the COT initiating UE: Referring to FIG. 17, when ZoneID_A is the same as ZoneID_RX in the COT-SI and ZondID_B is the same as ZoneID_TX in the COT-SI, the COT indicated by the COT-SI may be shared with the UE_A, which belongs to the same zone as the COT initiating UE, for unicasting with the UE_B, which belongs to the same zone as the COT initiating UE. The UE_A and the UE_B may listen to the COT-SI transmitted by the COT initiating UE and compare the COT-SI with their respective Zone IDs to use the COT for unicast communication between the UE_A and the UE_B. For example, in the case of Case 2, the UE_A may transmit a transport block to the UE_B within the COT together with an SCI format including a cast type field set to unicast, or the UE_B may transmit a transport block to the UE_A within the COT together with an SCI format including a cast type field set to unicast.
* Case 3. Unicast with the responding UE: Referring to FIG. 18, when ZoneID_A is the same as ZoneID_TX within the COT-SI and the destination ID included in the SCI format of the COT initiating UE matches the corresponding destination ID of UE_A, the COT indicated by the COT-SI may be shared with the UE_A, which belongs to the same zone as the COT initiating UE, for unicasting with the responding UE of the COT initiating UE. For example, in Case 3, the UE_A may transmit a transport block to the response UE of the COT initiating UE within the COT together with an SCI format including a cast type field set to unicast, or the response UE may transmit a transport block to the UE_A within the COT together with an SCI format including a cast type field set to unicast.
* Case 4. Unicast with a UE other than the response UE: Referring to FIG. 19, when ZoneID_A is the same as ZoneID_TX within the COT-SI and ZoneID_B is the same as ZoneID_RX within the COT-SI, the COT indicated by the COT-SI may be shared with the UE_A, which belongs to the same zone as the COT initiating UE, for unicasting with the UE_B, which belongs to the same zone as the response UE of the UE. The UE_A and the UE_B may listen to the COT-SI transmitted by the COT initiating UE and compare the COT-SI with their respective Zone IDs to use the COT for unicast communication between the UE_A and the UE_B. For example, in the case of Case 4, the UE_A may transmit a transport block to the UE_B within the COT together with an SCI format including a cast type field set to unicast, or the UE_B may transmit a transport block to the UE_A within the COT together with an SCI format including a cast type field set to unicast.
* Case 5. Unicast with the COT initiating UE: Referring to FIG. 20, when ZoneID_A is the same as ZoneID_TX within the COT-SI and the source ID included in the COT initiating UE's SCI format matches the corresponding destination ID of the UE_A, the COT indicated by the COT-SI may be shared with the UE_A, which belongs to the same zone as the COT initiating UE, for unicast with the COT initiating UE. For example, in Case 5, the UE_A may transmit a transport block to the COT initiating UE within the COT together with an SCI format including a cast type field set to unicast, or the COT initiating UE may transmit a transport block to the UE_A within the COT together with an SCI format including a cast type field set to unicast.
* Case 6. Unicast with the responding UE: Referring to FIG. 21, when ZoneID_A is the same as ZoneID_RX within the COT-SI and the destination ID included in the COT initiating UE's SCI format matches the corresponding destination ID of the UE_A, the COT indicated by the COT-SI may be shared with the UE_A, which belongs to the same zone as the responding UE, for unicast with the COT initiating UE to the responding UE. For example, in Case 6, the UE_A may transmit a transport block to the response UE of the COT initiating UE within the COT together with an SCI format including a cast type field set to unicast, or the response UE may transmit a transport block to the UE_A within the COT together with an SCI format including a cast type field set to unicast.

In some embodiments of the present specification, a COT sharing availability indication (COT-AI) may be included in the COT-SI. For example, when the COT-AI is indicated by a first value (e.g., "1"), it may be defined that sharing the COT initiated by a COT initiating UE with UE_A described in Cases 1 to 6 is permitted, and otherwise, it is not permitted.

Location-based COT sharing according to some embodiments of the present specification may also apply to additional ID(s) when the SCI format including the COT-SI includes additional ID(s). For example, a UE identified by a destination ID and/or source ID indicated by additional IDs may determine whether to share a COT identified by the SCI format including the additional IDs according to some embodiments of the present specification.

The COT initiating UE may perform a Type 1 LBT (i.e., Type 1 channel access) on behalf of other UEs and transmit a COT-SI including ZoneID_TX and ZoneID_RX according to some embodiments of the present specification. A UE receiving the COT-SI may compare its own Zone ID with ZoneID_TX and ZoneID_RX included in the COT-SI to determine whether to perform transmission using resources within the COT indicated by the COT-SI.

According to some embodiments of the present specification, UEs other than a target RX UE to which the TX UE transmits PSCCH/PSSCH may also perform SL transmission and/or SL reception on the COT initiated by the TX UE based on the COT-SI. That is, according to some embodiments of the present specification, the COT initiating UE may grant COT sharing opportunities to more UEs.

In the case of conventional communication over a shared spectrum, all UEs that receive a DCI format (e.g., DCI format 2_0) including COT sharing information transmitted by a BS may share the COT. Since UE-to-UE COT sharing is determined by the COT initiating UE based on only channel conditions therearound, sharing the COT with an unspecified number of UEs may lead to unexpected problems because the interference environment of each UE may differ from that of the COT initiating UE. According to some embodiments of the present specification, additional COT sharing may be permitted only to UEs that belong to the same zone as the COT initiating UE or the corresponding responding UE and have similar channel or interference environments based on ZoneID_TX and ZoneID_RX.

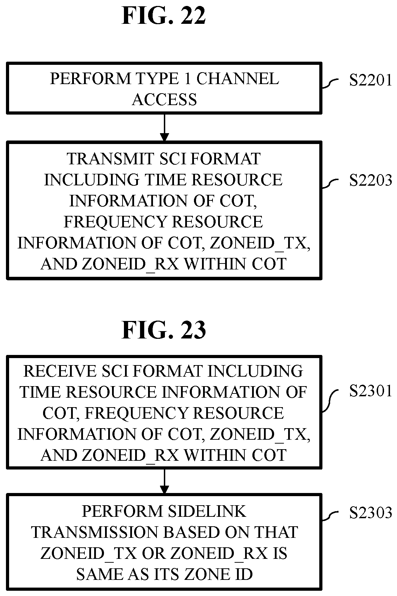

FIG. 22 illustrates an example of a process in which a communication device performs a sidelink transmission according to some implementations of the present specification.

A TX UE may perform operations according to some embodiments of the present specification in relation to SL transmission. The TX UE may include at least one transceiver, at least one processor, and at least one computer memory that is operably connected to the at least one processor and stores instructions that, when executed, cause the at least one processor to perform operations according to some implementations of the present specification. A processing device for the TX UE may include at least one processor, and at least one computer memory that is operably connected to the at least one processor and stores instructions that, when executed, cause the at least one processor to perform operations according to some implementations of the present specification. A computer-readable (non-transitory) storage medium may store at least one computer program including instructions that, when executed by the at least one processor, cause the at least one processor to perform operations according to some implementations of the present specification. A computer program or computer program product may be recorded on at least one computer-readable (non-transitory) storage medium and may include instructions that, when executed, cause (at least one processor) to perform operations according to some implementations of the present specification.

In the TX UE, the processing unit, the computer-readable (non-transient) storage medium, and/or the computer program product, the operations may include performing a Type 1 channel access on a cell for transmission of a transport block (S2201), and based on the success of the Type 1 channel access to the cell, transmitting the transport block and a first SCI format including COT sharing information including time domain information and frequency domain information on the COT for the cell within the COT determined by the Type 1 channel access (S2203). The first SCI format includes a first zone ID and a second zone ID, in which the first zone ID is the ID of the zone to which the communication device belongs and the second zone ID is the zone ID of the zone to which the destination of the transport block belongs.

In some embodiments, the transport block and the first SCI format may be transmitted via PSSCH.

In some embodiments, the operations may include transmitting the PSSCH and a PSCCH carrying a second SCI format for scheduling the first SCI format.

FIG. 23 shows an example of a process in which the communication device performs sidelink reception according to some embodiments of the present specification.

An RX UE may perform operations according to some embodiments of the present specification in relation to SL reception. The RX UE may include at least one transceiver, at least one processor, and at least one computer memory that is operably connected to the at least one processor and stores instructions that, when executed, cause the at least one processor to perform operations according to some implementations of the present specification. A processing device for the RX UE may include at least one processor, and at least one computer memory that is operably connected to the at least one processor and stores instructions that, when executed, cause the at least one processor to perform operations according to some implementations of the present specification. A computer-readable (non-transitory) storage medium may store at least one computer program including instructions that, when executed by the at least one processor, cause the at least one processor to perform operations according to some implementations of the present specification. A computer program or computer program product may be recorded on at least one computer-readable (non-transitory) storage medium and may include instructions that, when executed, cause (at least one processor) to perform operations according to some implementations of the present specification.

In the RX UE, the processing unit, the computer-readable (non-transient) storage medium, and/or the computer program product, the operations may include receiving a first SCI format including COT sharing information including time domain information and frequency domain information on a COT for a cell (S2301), in which the first SCI format includes a first zone ID and a second zone ID, the first zone ID is the ID of the zone to which a first communication device that transmitted the first SCI format belongs, and the second zone ID is the zone ID of the zone to which a second communication device that is the destination of the transport block associated with the first SCI format belongs; and performing a sidelink transmission within the COT, based on that the first zone ID or the second zone ID is the same as a third zone ID of the communication device (S2303).

In some embodiments, the performing of the sidelink transmission within the COT based on that the first zone ID or the second zone ID is the same as the third zone ID of the communication device may include performing a Type 2 channel access within the COT, and performing the sidelink transmission within the COT based on the success of the Type 2 channel access.

In some embodiments, the performing the sidelink transmission may include transmitting a second SCI format including a cast type field set to unicast.

In some embodiments, the performing of the sidelink transmission within the COT based on that the first zone ID or the second zone ID is the same as the third zone ID of the communication device may include performing the sidelink transmission to the first communication device based on that the third zone ID is the same as the second zone ID and the source ID in the first SCI format matches the destination ID assigned to the communication device (see FIG. 16).

In some embodiments, the performing of the sidelink transmission within the COT based on that the first zone ID or the second zone ID is the same as the third zone ID of the communication device may include performing the sidelink transmission to the target communication device based on that the third zone ID is the same as the second zone ID and the ID of the zone to which the target communication device for the sidelink transmission belongs is the same as the first zone ID (see FIG. 17).

In some embodiments, the performing of the sidelink transmission within the COT based on that the first zone ID or the second zone ID is the same as the third zone ID of the communication device may include performing the sidelink transmission to the second communication device based on that the third zone ID is the same as the first zone ID and the destination ID in the first SCI format matches the destination ID assigned to the communication device (see FIG. 18).

In some embodiments, the performing of the sidelink transmission within the COT based on that the first zone ID or the second zone ID is the same as the third zone ID of the communication device may include performing the sidelink transmission to the target communication device based on that the third zone ID is the same as the first zone ID and the ID of the zone to which the target communication device for the sidelink transmission belongs is the same as the second zone ID (see FIG. 19).

In some embodiments, the performing of the sidelink transmission within the COT based on that the first zone ID or the second zone ID is the same as the third zone ID of the communication device may include performing the sidelink transmission to the first communication device based on that the third zone ID is the same as the first zone ID and the source ID in the first SCI format matches the destination ID assigned to the communication device (see FIG. 20).

In some embodiments, the performing of the sidelink transmission within the COT based on that the first zone ID or the second zone ID is the same as the third zone ID of the communication device may include performing the sidelink transmission to the second communication device based on that the third zone ID is the same as the second zone ID and the source ID in the first SCI format matches the destination ID assigned to the communication device (see FIG. 21).

In some embodiments, the first SCI format may include a COT-AI field. In some embodiments, the operations may include comparing the first zone ID or the second zone ID with the third zone ID of the communication device based on that the COT-AI field is set to a first value.

As described above, the examples disclosed in the present specification are provided to enable those skilled in the art to implement and practice the present specification. While the above description has been provided with reference to the examples of the present specification, those skilled in the art can modify and change the examples of the present specification in various ways. Accordingly, the present specification is not intended to be limited to the examples described herein but is intended to provide the broadest scope consistent with the principles and novel features disclosed herein.

The embodiments of the present specification may be used in wireless communication systems, including a BS, a UE, and other devices.

## Claims

1. A method of transmitting, by a communication device, a sidelink signal in a wireless communication system, the method comprising:
performing a Type 1 channel access on a cell for transmission of a transport block; and
based on success of the Type 1 channel access for the cell, transmitting first sidelink control information (SCI) format including time domain information and frequency domain information on a channel occupancy time (COT) for the cell, and the transport block within the COT determined by the Type 1 channel access,
wherein the first SCI format includes a first zone identifier (ID) and a second zone ID, the first zone ID being an ID of a zone to which the communication device belongs and the second zone ID being a zone ID of a zone to which a destination of the transport block belongs.

2. The method of claim 1, wherein the transport block and the first SCI format are transmitted through a physical sidelink shared channel (PSSCH).

3. The method of claim 2, comprising transmitting the PSSCH and a physical sidelink control channel (PSCCH) carrying a second SCI format for scheduling the first SCI format within the COT.

4. A communication device for transmitting a sidelink channel in a wireless communication system, the communication device comprising:
at least one transceiver;
at least one processor; and
at least one memory that is operatively connected to the at least one processor and stores instructions that, when executed, cause the at least one processor to perform operations,
wherein the operations includes:
performing a Type 1 channel access on a cell for transmission of a transport block; and
based on success of the Type 1 channel access for the cell, transmitting first sidelink control information (SCI) format including time domain information and frequency domain information on a channel occupancy time (COT) for the cell, and the transport block within the COT determined by the Type 1 channel access,
wherein the first SCI format includes a first zone identifier (ID) and a second zone ID, the first zone ID being an ID of a zone to which the communication device belongs and the second zone ID being a zone ID of a zone to which a destination of the transport block belongs.

5. A processing device for a communication device, comprising:
at least one processor; and
at least one memory that is operatively connected to the at least one processor and stores instructions that, when executed, cause the at least one processor to perform operations,
wherein the operations includes:
performing a Type 1 channel access on a cell for transmission of a transport block; and
based on success of the Type 1 channel access for the cell, transmitting first sidelink control information (SCI) format including time domain information and frequency domain information on a channel occupancy time (COT) for the cell, and the transport block within the COT determined by the Type 1 channel access,
wherein the first SCI format includes a first zone identifier (ID) and a second zone ID, the first zone ID being an ID of a zone to which the communication device belongs and the second zone ID being a zone ID of a zone to which a destination of the transport block belongs.

6. A computer-readable non-transitory storage medium including at least one computer program that causes at least one processor to perform operations, wherein the operations includes:
performing a Type 1 channel access on a cell for transmission of a transport block; and
based on success of the Type 1 channel access for the cell, transmitting first sidelink control information (SCI) format including time domain information and frequency domain information on a channel occupancy time (COT) for the cell, and the transport block within the COT determined by the Type 1 channel access,
wherein the first SCI format includes a first zone identifier (ID) and a second zone ID, the first zone ID being an ID of a zone to which the communication device belongs and the second zone ID being a zone ID of a zone to which a destination of the transport block belongs.

7. A method of receiving, by a communication device, a sidelink signal in a wireless communication system, the method comprising receiving a first sidelink control information (SCI) format including channel occupancy time (COT) sharing information including time domain information and frequency domain information on COT for a cell,
wherein the first SCI format includes a first zone identifier (ID) and a second zone ID, the first zone ID being an ID of the zone to which a first communication device that has transmitted the first SCI format belongs, and the second zone ID being a zone ID of a zone to which a second communication device that is a destination of a transport block related to the first SCI belongs; and
performing a sidelink transmission within the COT based on that the first zone ID or the second zone ID is the same as a third zone ID of the communication device.

8. The method of claim 7,
wherein the performing of the sidelink transmission within the COT based on that the first zone ID or the second zone ID is the same as a third zone ID of the communication device includes:
performing a Type 2 channel access within the COT; and
performing the sidelink transmission within the COT based on success of the Type 2 channel access.

9. The method of claim 7, wherein the performing of the sidelink transmission includes transmitting a second SCI format including a cast type field set to unicast.

10. The method of claim 7, wherein the performing of the sidelink transmission within the COT based on that the first zone ID or the second zone ID is the same as the third zone ID of the communication device includes performing the sidelink transmission to the first communication device based on that the third zone ID is the same as the second zone ID and a source ID in the first SCI format matches a destination ID assigned to the communication device.

11. The method of claim 7, wherein the performing of the sidelink transmission within the COT based on that the first zone ID or the second zone ID is the same as the third zone ID of the communication device includes performing the sidelink transmission to the target communication device based on that the third zone ID is the same as the second zone ID and an ID of a zone to which the target communication device for the sidelink transmission belongs is the same as the first zone ID.

12. The method of claim 7, wherein the performing of the sidelink transmission within the COT based on that the first zone ID or the second zone ID is the same as the third zone ID of the communication device includes performing the sidelink transmission to the second communication device based on that the third zone ID is the same as the first zone ID and a destination ID in the first SCI format matches a destination ID assigned to the communication device.

13. The method of claim 7, wherein the performing of the sidelink transmission within the COT based on that the first zone ID or the second zone ID is the same as the third zone ID of the communication device includes performing the sidelink transmission to the target communication device based on that the third zone ID is the same as the first zone ID and an ID of a zone to which the target communication device for the sidelink transmission belongs is the same as the second zone ID.

14. The method of claim 7, wherein the performing of the sidelink transmission within the COT based on that the first zone ID or the second zone ID is the same as the third zone ID of the communication device includes performing the sidelink transmission to the first communication device based on that the third zone ID is the same as the first zone ID and a source ID in the first SCI format matches a destination ID assigned to the communication device.

15. The method of claim 7, wherein the performing of the sidelink transmission within the COT based on that the first zone ID or the second zone ID is the same as the third zone ID of the communication device includes performing the sidelink transmission to the second communication device based on that the third zone ID is the same as the second zone ID and a source ID in the first SCI format matches a destination ID assigned to the communication device.

16. The method of claim 7, wherein the first SCI format includes a COT sharing availability indication (COT-AI) field, and
the method comprises comparing the first zone ID or the second zone ID with the third zone ID of the communication device based on that the COT-AI field is set to a first value.

17. A communication device for receiving a sidelink signal in a wireless communication system, the communication device comprising:
at least one transceiver;
at least one processor; and
at least one memory that is operatively connected to the at least one processor and stores instructions that, when executed, cause the at least one processor to perform operations,
wherein the operations includes:
receiving a first sidelink control information (SCI) format including channel occupancy time (COT) sharing information including time domain information and frequency domain information on COT for a cell,
wherein the first SCI format includes a first zone identifier (ID) and a second zone ID, the first zone ID being an ID of the zone to which a first communication device that has transmitted the first SCI format belongs, and the second zone ID being a zone ID of a zone to which a second communication device that is a destination of a transport block related to the first SCI belongs; and
performing a sidelink transmission within the COT based on that the first zone ID or the second zone ID is the same as a third zone ID of the communication device.

18. A processing device for a communication device, comprising:
at least one processor; and
at least one memory that is operatively connected to the at least one processor and stores instructions that, when executed, cause the at least one processor to perform operations,
wherein the operations includes:
receiving a first sidelink control information (SCI) format including channel occupancy time (COT) sharing information including time domain information and frequency domain information on COT for a cell,
wherein the first SCI format includes a first zone identifier (ID) and a second zone ID, the first zone ID being an ID of the zone to which a first communication device that has transmitted the first SCI format belongs, and the second zone ID being a zone ID of a zone to which a second communication device that is a destination of a transport block related to the first SCI belongs; and
performing sidelink transmission within the COT based on that the first zone ID or the second zone ID is the same as a third zone ID of the communication device.

19. A computer-readable non-transitory storage medium including at least one computer program that causes at least one processor to perform operations, wherein the operations includes:
receiving a first sidelink control information (SCI) format including channel occupancy time (COT) sharing information including time domain information and frequency domain information on COT for a cell,
wherein the first SCI format includes a first zone identifier (ID) and a second zone ID, the first zone ID being an ID of the zone to which a first communication device that has transmitted the first SCI format belongs, and the second zone ID being a zone ID of a zone to which a second communication device that is a destination of a transport block related to the first SCI belongs; and
performing a sidelink transmission within the COT based on that the first zone ID or the second zone ID is the same as a third zone ID of the communication device.
